# EUROPEAN PATENT APPLICATION

(11) **EP 1 508 503 A1**
(43) Date of publication of application: **23.02.2005**
(21) Application number: 03733070.1
(22) Date of filing: 26.05.2003
(51) Int. Cl.: B62D 6/00, B62D 5/04

(54) **STEERING DEVICE**

(30) Priority: 27.05.2002 JP 2002153072
(71) Applicant: Toyoda Koki Kabushiki Kaisha, Kariya-shi, Aichi 448-8652 (JP); Aisin Seiki Kabushiki Kaisha, Kariya-shi, Aichi-ken 448-8650 (JP)
(72) Inventor: KATO, Hiroaki c/o Toyoda Koki Kabushiki Kaisha, Kariya-shi, Aichi 448-8652 (JP); MOMIYAMA, Minekazu Toyoda Koki Kabushiki Kaisha, Kariya-shi, Aichi 448-8652 (JP); OGAWA, Shoji c/o Toyoda Koki Kabushiki Kaisha, Kariya-shi, Aichi 448-8652 (JP); ASANO, Kenji c/o Advics Co., Ltd., Kariya-shi, Aichi 448-8650 (JP); IMOTO, Yuzou c/o Advics Co., Ltd., Kariya-shi, Aichi 448-8650 (JP); YASUI, Yoshiyuki c/o Aisin Seiki Kabushiki Kaisha, Kariya-shi, Aichi 448-8650 (JP); TANAKA, Wataru c/o Aisin Seiki Kabushiki Kaisha, Kariya-shi, Aichi 448-8650 (JP); ONO, Eiichi c/o Kabushiki Kaisha Toyota, Aichi-gun, Aichi 480-1192 (JP); MURAGISHI, Yuji c/o Kabushiki Kaisha Toyota, Aichi-gun, Aichi 480-1192 (JP)
(74) Representative: Leson, Thomas Johannes Alois, Dipl.-Ing.
(86) International application number: PCT/JP2003/006560
(87) International publication number: WO 2003/099636

(57) **Abstract**

In accordance with a steering apparatus (20), a grip state between a ground surface on which a steered wheel is grounded and the steered wheel is estimated by a grip degree estimation arithmetically operating process (30a) which is arithmetically operated by AFS_ECU (30), and VGRS target angle is set such that a steering gear ratio is increased in the case that the grip degree gets close to a grip limit on the basis of an estimated grip state, in accordance with a grip degree vs gear ratio map (30b). Accordingly, since it is possible to estimate the grip degree which is changed in correspondence to a magnitude of the road surface µ, for example, in the case that the steered wheel gets close to the grip limit, it is possible to increase the steering gear ratio so as to set large even at a time when the vehicle runs at the low speed. Therefore, since it is possible to prevent a phenomenon that the steered wheel is largely controlled by a smaller steering angle from being generated in the case that the vehicle runs on the road surface having the low µ, there is obtained an effect that a stability in the vehicle motion can be improved.

## Description

### Cross-Reference To Related Application

The present application claims priority under 35 U.S.C. § 119 to Japanese Patent Application No. JP 2002-153072. The contents of these applications are incorporated herein by reference.

### TECHNICAL FIELD

The present invention relates to a steering apparatus provided with a transfer ratio variable means for varying a transfer ratio by driving an electric motor in the middle of a steering transmission system connecting a steering wheel to a steered wheel.

### BACKGROUND ART

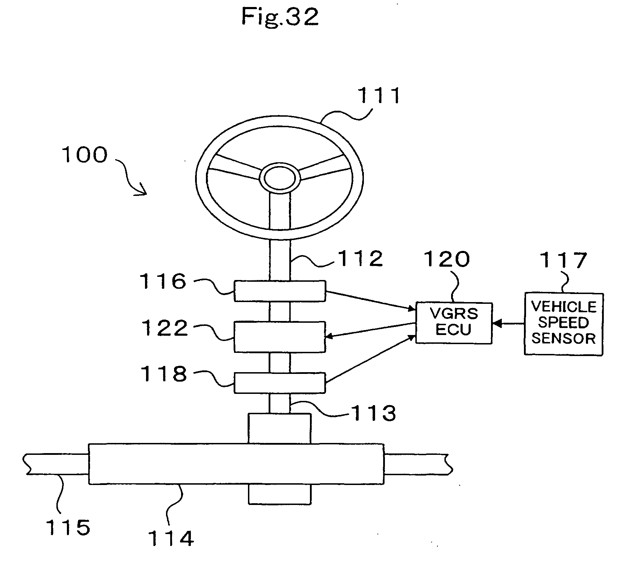

As a structure provided with the transfer ratio variable means for varying the transfer ratio by driving the electric motor in the middle of the steering transmission system connecting the steering wheel to the steered wheel, there is a steering apparatus 100 constituted by a steering wheel 111, a first steering shaft 112, a second steering shaft 113, a steering gear box 114, a steering angle sensor 116, a vehicle speed sensor 117, an output angle sensor 118, VGRS_ECU 120 and a gear ratio variable unit 122, for example, as shown in Fig. 32. In this case, there is a case that "transfer ratio variable means for varying the transfer ratio by driving the electric motor provided in the middle of the steering transmission system connecting the steering wheel to the steered wheel" is called as a Variable Gear Ratio System (VGRS).

In other words, one end of the first steering shaft 112 is connected to the steering wheel 111, and an input side of the gear ratio variable unit 122 is connected to another end side of the first steering shaft 112. The gear ratio variable unit 122 is constituted by a motor, a speed reduction gear and the like, one end side of the second steering shaft 113 is connected to an output side thereof , and an input side of the steering gear box 114 is connected to another end side of the second steering shaft 113. Further, the steering gear box 114 is structured such that the steering gear box 114 can convert a rotational. motion input by the second steering shaft 13 into an axial motion of a rod 115 provided with the steering wheel (not shown) by a rack and pinion gear (not shown) or the like so as to output. Further, a rotational angle (a steering angle) of the first steering shaft 112, a rotational angle of the second steering shaft 113 and a vehicle speed are respectively detected by the steering angle sensor 116, the output angle sensor 118 and the vehicle speed sensor 117, and are respectively input as a steering angle signal, an output angle signal and a vehicle speed signal to the VGRS_ECU 120.

In accordance with the structure mentioned above, in the gear ratio variable unit 122, a ratio of an output gear with respect to an input gear is changed in real time by the motor and the speed reduction gear in correspondence to the vehicle speed, and a ratio of an output angle of the second steering shaft 113 with respect to the first steering shaft 112 is variable. In other words, it is possible to determine a rotational angle of the motor in the gear ratio variable unit 122 univocally defined in correspondence to the vehicle speed on the basis of a motor rotational angle map (not shown) by inputting the steering angle signal by the steering angle sensor 116 and the vehicle speed signal by the vehicle speed sensor 117 to the VGRS_ECU 120, and it is possible to supply amotor voltage in correspondence to a determined rotational angle command value to a motor driving circuit via an amplifying means.

Accordingly, it is possible to set a steering gear ratio in correspondence to the vehicle speed, for example, it is possible to set such that an output angle of the gear ratio variable unit 122 is larger than the steering angle of the steering wheel at a time when the vehicle stops or runs at a low speed, and the output angle of the gear ratio variable unit 122 is smaller than the steering angle of the steering wheel at a time when the vehicle runs at a high speed. Accordingly, for example, since the steering gear ratio by the gear ratio variable unit 122 is set small in the case that the vehicle stops and runs at a low speed, the steered wheel can be largely controlled so as to make a steering operation of a driver easy even when the steering angle by the steering wheel is small. Further, since the steering gear ratio by the gear ratio variable unit 122 can be set large in the case that the vehicle runs at a high speed, the steered wheel can be controlled small and it is possible to secure a stability in the vehicle motion even in the case that the steering angle by the steering wheel is large.

However, the steering apparatus provided with the VGRS mentioned above, since the steering gear ratio by the gear ratio variable unit 122 is set small in the case that the vehicle runs at a low speed, the steered wheel can be controlled largely even when the steering angle by the steering wheel is small. Accordingly, since the steered wheel can be controlled largely by the smaller steering angle even in the case that the vehicle runs on a road in which a frictional coefficient µ of a road surface contacted with the steered wheel (hereinafter, refer to as "road surface µ") is small, that is, a low µ road surface, there is a problem that a stability in the vehicle motion may be deteriorated.

Further, the steering apparatus provided with the VGRS mentioned above, the steering gear ratio is changed in correspondence to the vehicle speed. Accordingly, in the case that the vehicle is suddenly accelerated or decelerated, for example, in the process of turning while keeping a fixed steering angle, there may be generated a case that the steering gear ratio is changed in correspondence to the case. In other words, since an actual steering angle to a target actual steering angle is controlled with respect to the steering operation, in spite that the steering wheel is kept at a fixed angle by the driver, there is generated a problem that the stability in the vehicle motion may be deteriorated.

Further, the problem that the stability in the vehicle motion is deteriorated may be generated in "a steering apparatus provided with an operating state detecting means for detecting an operating state of a steering wheel so as to output an operating signal, a vehicle speed detecting means for detecting a vehicle speed so as to output a vehicle speed signal, a steering angle determining means for determining a target actual steering angle of a steered wheel on the basis of the operating signal detected by the operating state detecting means and the vehicle speed signal detected by the vehicle speed detecting means, and a steered wheel control means for controlling the steered wheel to the target actual steering angle determined by the steering angle determining means", that is, a so-called steer-by-wire steering apparatus in which the steering wheel and the steered wheel are mechanically separated.

The present invention is made for the purpose of solving the problems mentioned above, and an object of the present invention is to provide a steering apparatus which can improve a stability in a vehicle motion.

### DISCLOSURE OF THE INVENTION

In order to achieve the above object, according to claim 1, a steering apparatus provided with a transfer ratio variable means for changing a transfer ratio on the basis of driving of an electric motor in the middle of a steering transmission system connecting a steering wheel and a steered wheel, comprising:
a steering force index detecting means for detecting at least one steering force index of steering indexes including a steering torque and a steering force applied to a steering system from the steering wheel of a vehicle to a suspension;
a self-aligning torque estimating means for estimating a self-aligning torque generated in a wheel in a front side of said vehicle on the basis of a detected signal of said steering force index detecting means;
a vehicle state quantity detecting means for detecting a state quantity of said vehicle;
a front wheel index estimating means for estimating at least one front wheel index of front wheel indexes including a side force applied to the wheel in the front side of said vehicle and a front wheel slip angle, on the basis of a detected signal of said vehicle state quantity detecting means;
a grip degree estimating means for estimating a grip degree applied to at least the wheel in the front side of said vehicle, on the basis of a change in the self-aligning torque estimated by said self-aligning torque estimating means with respect to the front wheel index estimated by said front wheel index estimating means; and
a transfer ratio setting means for setting a transfer ratio of said transfer ratio variable means on the basis of the grip degree estimated by said grip degree estimating means.

In accordance with a first aspect of the present invention, a steering force index detecting means detects at least one steering force index of steering indexes including a steering torque and a steering force applied to a steering system from a steering wheel of a vehicle to a suspension, and a self-aligning torque estimating means estimates a self-aligning torque generated in a wheel in a front side of the vehicle on the basis of the detected signal of the steering force index detecting means. Further, a front wheel index estimating means estimates at least one of front wheel indexes including a side force applied to the wheel in the front side of the vehicle and a front wheel slip angle, by using a state quantity of the vehicle detected by a vehicle state quantity detecting means. Further, a grip degree estimating means estimates a grip degree applied to at least the wheel in the front side of the vehicle, on the basis of a change in the self-aligning torque estimated by the self-aligning torque estimating means with respect to the front wheel index estimated by the front wheel index estimating means. A transfer ratio of a transfer ratio variable means is set by a transfer ratio setting means on the basis of the grip degree estimated by the grip degree estimating means. Accordingly, since it is possible to estimate the grip degree which is changed in correspondence to amagnitude of the road surface µ, for example, the grip degree estimated by the grip degree estimating means is reduced in the case that the vehicle runs on the road surface having a low µ, it is possible to set the transfer ratio of the transfer ratio variable means large even at a time when the vehicle runs at the low speed. Therefore, since it is possible to prevent a phenomenon that the steered wheel is largely controlled by a smaller steering angle from being generated in the case that the vehicle runs on the road surface having the low µ, there is obtained an effect that a stability in the vehicle motion can be improved.

According to claim 2, a steering apparatus as claimed in claim 1, wherein said transfer ratio setting means sets said transfer ratio such that said transfer ratio is increased in the case that said grip degree gets close to a grip limit of said steered wheel. In this case, "grip limit" means a grip state just before the steered wheel starts slipping on the contact surface on the basis of the grip degree being equal to or less than a certain threshold value.

In accordance with a second aspect of the present invention, the transfer ratio settingmeans sets the transfer ratio such that the transfer ratio is increased in the case that the grip degree gets close to a grip limit of the steered wheel. Accordingly, in the case that the steered wheel gets close to the grip limit, it is possible to increase the transfer ratio and set large even at a time when the vehicle runs at a low speed. Therefore, since it is possible to prevent a phenomenon that the steered wheel is largely controlled by a smaller steering angle from being generated in the case that the vehicle runs on the road surface having the low µ, there is obtained an effect that a stability in the vehicle motion can be improved.

According to claim 3, a steering apparatus as claimed in claim 1, further comprising a steering speed detecting means for detecting a steering speed by the steering wheel,
wherein said transfer ratio setting means sets said transfer ratio such that said transfer ratio is increased on the basis of a steering speed detected by said steering speed detecting means in the case that said grip degree gets close to a grip limit of said steered wheel.

In accordance with a third aspect of the present invention, the transfer ratio settingmeans sets the transfer ratio such that the transfer ratio is increased on the basis of a steering speed detected by a steering speed detecting means in the case that the grip degree gets close to a grip limit of the steered wheel. Accordingly, since it is possible to set the transfer ratio, for example, such that the transfer ratio is further increased in correspondence to the increase of the steering speed, in the case of a rapid steering, it is possible to set the larger transfer ratio which is increased further in comparison with the case that the steering wheel is not rapidly steered. Therefore, since it is possible to prevent a phenomenon that the steered wheel is largely controlled from being generated even in the case of the rapid steering such that the vehicle runs on the road surface having the low µ, there is obtained an effect that a stability in the vehicle motion can be improved.

According to claim 4, a steering apparatus as claimed in claim 1, further comprising a vehicle speed detecting means for detecting a speed of the vehicle,
wherein said transfer ratio setting means sets said transfer ratio such that said transfer ratio is increased on the basis of a vehicle speed detected by said vehicle speed detecting means in the case that said grip degree gets close to a grip limit of said steered wheel.

In accordance with a fourth aspect of the present invention, the transfer ratio settingmeans sets the transfer ratio such that the transfer ratio is increased on the basis of a vehicle speed detected by a vehicle speed detecting means in the case that the grip degree gets close to a grip limit of the steered wheel. Accordingly, since it is possible to set the transfer ratio, for example, such that the transfer ratio is further increased in correspondence to the increase of the vehicle speed, in the case of a high speed running, it is possible to set the larger transfer ratio which is increased further in comparison with the case that the vehicle does not run at a high speed (for example, the case that the vehicle runs at a middle or low speed or stops). Therefore, since it is possible to prevent a phenomenon that the steered wheel is largely controlled from being generated even in the case that the vehicle runs on the road surface having the low µ at a high speed, there is obtained an effect that a stability in the vehicle motion can be improved.

According to claim 5, a steering apparatus as claimed in claim 1, further comprising:
an oversteer state determining means for determining that a vehicle state is in an oversteer state; and
a steer-back rotation detecting means for detecting that a rotation of the steering wheel is in a steer-back direction,
wherein said transfer ratio setting means sets said transfer ratio such that said transfer ratio is increased in the case that said grip degree gets close to a grip limit of said steered wheel, and
wherein said transfer ratio setting means sets said transfer ratio such that said transfer ratio is reduced in the case that said oversteer state determining means determines that the vehicle state is the oversteer state, and said steer-back rotation detecting means detects that the rotation of the steering wheel is in a steering back direction.

In accordance with a fifth aspect of the present invention, the transfer ratio setting means sets the transfer ratio such that the transfer ratio is increased in the case that the grip degree gets close to a grip limit of the steered wheel, and the transfer ratio setting means sets the transfer ratio such that the transfer ratio is reduced in the case that an oversteer state determining means determines that a vehicle state is an oversteer state, and a steer-back rotation detecting means detects that a rotation of the steering wheel is in a steering back direction. Accordingly, since it is possible to set the transfer ratio such that the transfer ratio is reduced in the case that the oversteer state determining means determines that the vehicle state is in the oversteer state, and the steer-back rotation detecting means determines that the rotation of the steering wheel is in the steering back direction, that is, the driver executes a counter steering operation, the driver can easily executed the counter steering operation. Therefore, there is obtained an effect that a stability in the vehicle motion can be improved.

According to claim 6, a steering apparatus as claimed in claim 1, further comprising:
an understeer/oversteer determining means for determining on the basis of the state quantity of the vehicle whether the vehicle is in an oversteer or an understeer;
a transfer ratio determining means for determining the transfer ratio of the transfer ratio variable means on the basis of the grip degree of said grip estimating means and a determined result of said understeer/oversteer determining means.

In accordance with a sixth aspect of the present invention, an understeer/oversteer determining means determines whether the vehicle is in an understeer or an oversteer, and a transfer ratio determining means determines the transfer ratio of the transfer ratio variable means on the basis of a determined result of the understeer/oversteer determining means and the grip degree estimated by the grip degree estimating means. Therefore, since it is possible to change a response of the steering operation in correspondence to the state of the vehicle and the grip state, there is obtained an effect that a stability in the vehicle motion can be improved.

In order to achieve the above object, according to claim 7, a steering apparatus comprising:
an operating state detecting means for detect outputting an operating state of a steering wheel and outputting an operating signal;
a vehicle speed detecting means for detecting a vehicle speed and outputting a vehicle speed signal;
a steering angle determining means for determining a target actual angle of a steered wheel, on the basis of the operating signal detected by said operating state detecting means and the vehicle speed signal detected by said vehicle speed detecting means;
a steered wheel control means for controlling said steered wheel to said target actual angle determined by said steering angle determining means;
a steering force index detecting means for detecting at least one steering force index of steering indexes including a steering torque and a steering force applied to a steering system from the steering wheel of a vehicle to a suspension;
a self-aligning torque estimating means for estimating a self-aligning torque generated in a wheel in a front side of said vehicle on the basis of a detected signal of said steering force index detecting means;
a vehicle state quantity detecting means for detecting a state quantity of said vehicle;
a front wheel index estimating means for estimating at least one front wheel index of front wheel indexes including a side force applied to the wheel in the front side of said vehicle and a front wheel slip angle, on the basis of a detected signal of said vehicle state quantity detecting means; and
a grip degree estimating means for estimating a grip degree applied to at least the wheel in the front side of said vehicle, on the basis of a change in the self-aligning torque estimated by said self-aligning torque estimating means with respect to the front wheel index estimated by said front wheel index estimating means,
wherein said steered wheel is controlled on the basis of the grip degree estimated by said grip degree estimating means, by said steered wheel control means.

In accordance with a seventh aspect of the present invention, a steering angle concluding means concludes a target actual steering angle of the steered wheel on the basis of an operating signal detected by an operating state detecting means and a vehicle speed signal detected by a vehicle speed detecting means, and a steered wheel control means controls the steered wheel to the concluded target actual steering angle. Further, the steered wheel is controlled by the steered wheel control means on the basis of the grip degree estimated by the grip degree estimating means. Accordingly, since it is possible to estimate the grip degree changing in correspondence to the magnitude of the road surface µ even in the steering apparatus on the basis of the so-called steer-by-wire, the steered wheel is controlled by adding compensation to an initial target actual steering angle on the basis of the grip degree estimated by the grip degree estimating means in the case that the vehicle runs on the road surface having the low µ. Therefore, it is possible to prevent the steered wheel from being controlled over the grip limit. Accordingly, even when the vehicle runs on the road surface having the low µ, there is obtained an effect that a stability in the vehicle motion can be improved. In this case, as the control of the steered wheel on the basis of the grip degree executed by the steered wheel control means, it is possible to employ, for example, the invention the second to sixth aspects of the present invention.

### BRIEF DESCRIPTION OF THE DRAWINGS

Fig. 1 is a schematic view showing an outline structure of a steering apparatus of a first embodiment of the present invention;
Fig. 2 is a block diagram showing a main electric structure of the steering apparatus of the first embodiment;
Fig. 3 is a characteristic view showing a relation between a self-aligning torque and a side force in a state in which a tire rolls while slipping sideways, relating a general vehicle;
Fig. 4 is a characteristic view briefly showing a relation between the self-aligning torque and the side force in Fig. 3;
Fig. 5 is a characteristic view showing a characteristic of the self-aligning torque with respect to a front wheel side force of an embodiment of the present invention;
Fig. 6 is a block diagram of a grip degree estimation of an embodiment of the present invention;
Fig. 7 is a block diagram of a grip degree estimation in another embodiment of the present invention;
Fig. 8 is a characteristic view showing a relation between the front wheel side force and the self-aligning torque with respect to a front wheel slip angle of the other embodiment of the present invention;
Fig. 9 is a characteristic view showing a relation of the self-aligning torque with respect to the front wheel slip angle in the other embodiment of the present invention;
Fig. 10 is a characteristic view showing a relation of the self-aligning torque with respect to the front wheel slip angle of the other embodiment of the present invention;
Fig. 11 is a characteristic view showing a relation of the self-aligning torque with respect to the front wheel slip angle in the other embodiment of the present invention;
Fig. 12 is a characteristic view showing a relation of the self-aligning torque with respect to the front wheel slip angle in the other embodiment of the present invention;
Fig. 13A is a function block diagram expressing a VGRS target angle process by AFS_ECU of the steering apparatus of the first embodiment;
Fig. 13B is a schematic view showing an example of a map between a grip degree and a steering gear ratio shown in Fig. 13A;
Fig. 14 is a flow chart showing a flow of a steering gear ratio setting process by the AFS_ECU of the steering apparatus of the first embodiment;
Fig. 15 is a block diagram showing a main electric structure of a steering apparatus of a second embodiment;
Fig. 16 is a schematic view showing an example of a map obtained by a steering apparatus of the second embodiment, in which Fig. 16A shows an example of a map between a grip degree and a steering gear ratio shown in Fig. 15, and Fig. 16B shows an example of a map between a steering speed and a steering gear ratio shown in Fig. 15;
Fig. 17 is a function block diagram expressing a VGRS target angle process by AFS_ECU of a third embodiment;
Fig. 18 is a schematic view showing an example of a map obtained by a steering apparatus of the third embodiment, in which Fig. 18A shows an example of a map between a grip degree and a steering gear ratio shown in Fig. 17, and Fig. 18B shows an example of a map between a vehicle speed and a steering gear ratio gain shown in Fig. 17;
Fig. 19 is a function block diagram expressing a VGRS target angle process by AFS_ECU of a fourth embodiment;
Fig. 20 is a schematic view showing an example of a map obtained by a steering apparatus of the fourth embodiment, in which Fig. 20A shows an example of a map between a grip degree and a steering gear ratio shown in Fig. 19, and Fig. 20B shows an example of a map between a steering angle speed and a steering gear ratio shown in Fig. 19;
Fig. 21 is a flow chart showing a flow of a control achieved by the AFS_ECU of the steering apparatus of the fourth embodiment;
Fig. 22 is a flow chart showing a flow of an understeer/oversteer determining process shown in Fig. 11;
Fig. 23 is a flow chart showing a flow of a steering operation discriminating process shown in Fig. 11;
Fig. 24 is a flow chart showing a flow of a steering gear ratio selecting process shown in Fig. 11;
Fig. 25 is a function block diagram expressing a VGRS target angle process by AFS_ECU of a steering apparatus of a fifth embodiment;
Fig. 26 is a flow chart showing a flow of a control by the AFS_ECU of the steering apparatus of the fifth embodiment;
Fig. 27 is a flow chart showing a flow of an understeer/oversteer determining process shown in Fig. 16;
Fig. 28 is a flow chart showing a f low of a process of arithmetically operating a map between a grip degree and a steering gear ratio shown in Fig. 16;
Fig. 29 is a schematic view showing an outline structure of a steering apparatus of a sixth embodiment;
Fig. 30 is a characteristic view showing a relation of a self-aligning torque with respect to a front wheel slip angle in the other embodiment of the present invention;
Fig. 31 is a characteristic view showing a relation between a grip degree ε on the basis of a pneumatic trail and a grip degree εm on the basis of a road surface friction excess degree of the present invention; and
Fig. 32 is a schematic view showing an outline structure of a steering apparatus of a conventional VGRS control.

### BEST MODE FOR CARRYING OUT THE INVENTION

A description will be given below of embodiments of the present invention with reference to the acoompanying drawings. In this case , in each of the following embodiments, a description will be given on the basis of an example in which a steering apparatus of the present invention is applied to an electric type power steering apparatus (hereinafter, refer to as "steering apparatus") of a vehicle such as a motor vehicle or the like.

### [First Embodiment]

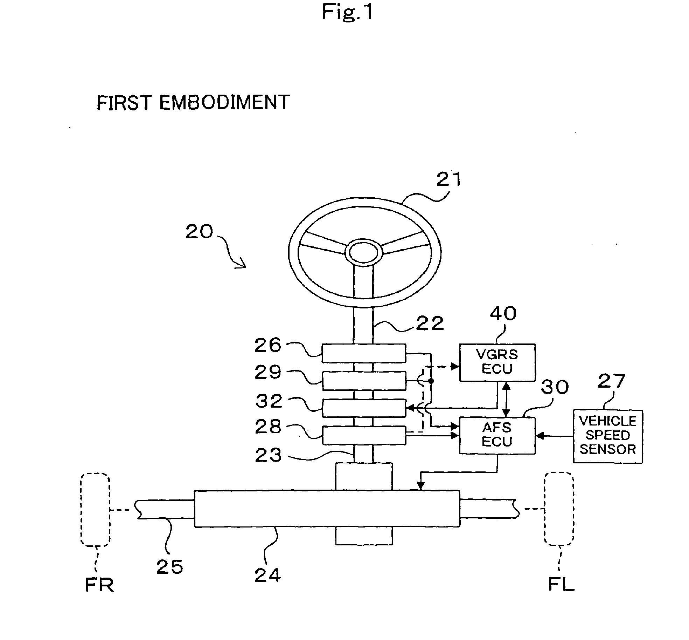

First, a description will be given of amain structure of a steering apparatus 20 of a first embodiment on the basis of Fig. 1. In this case, the steering apparatus 20 of the first embodiment may correspond to a steering apparatus stated in claim 1 or 2.

As shown in Fig. 1, the steering apparatus 20 has approximately the same structure as that of the steering apparatus 100 in accordance with the VGRS control shown in Fig. 32. In this case, since a steering wheel 21, a first steering shaft 22, a second steering shaft 23, a rod 25, a steering angle sensor 26, a vehicle speed sensor 27, an output angle sensor 28, a gear ratio variable unit 32 and a VGRS_ECU 40 shown in Fig. 1 respectively may correspond to the steering wheel 111, the first steering shaft 112, the second steering shaft 113, the rod 115, the steering angle sensor 116, the vehicle speed sensor 117, the output angle sensor 118, the gear ratio variable unit 122 and the VGRS_ECU 120 shown in Fig. 32, and are structure in the same manner as that of the steering apparatus 100 mentioned abave, a description thereof will be omitted. In this case, anAFS actuator 24 shown in Fig. 1 may correspond to the steering gear box 114 shown in Fig. 32, however, is different in a point that the AFS actuator 24 functions as a steering actuator generating an assist force in correspondence to a steering state by a motor 24a controlled by an AFS_ECU 30 so as to assist a steering operation. In this case, steered wheels FR and FL are attached to the rod 25.

In this case, the steering apparatus 20 shown in Fig. 1 has a function of variably controlling a steering gear ratio in correspondence to a vehicle speed by the gear ratio variable unit 32 on the basis of the VGRS control process by means of the VGRS_ECU 40, and a function of generating an assist force in correspondence to a steering state on the basis of a steering control by means of the AFS_ECU 30 so as to assist a steering operation.

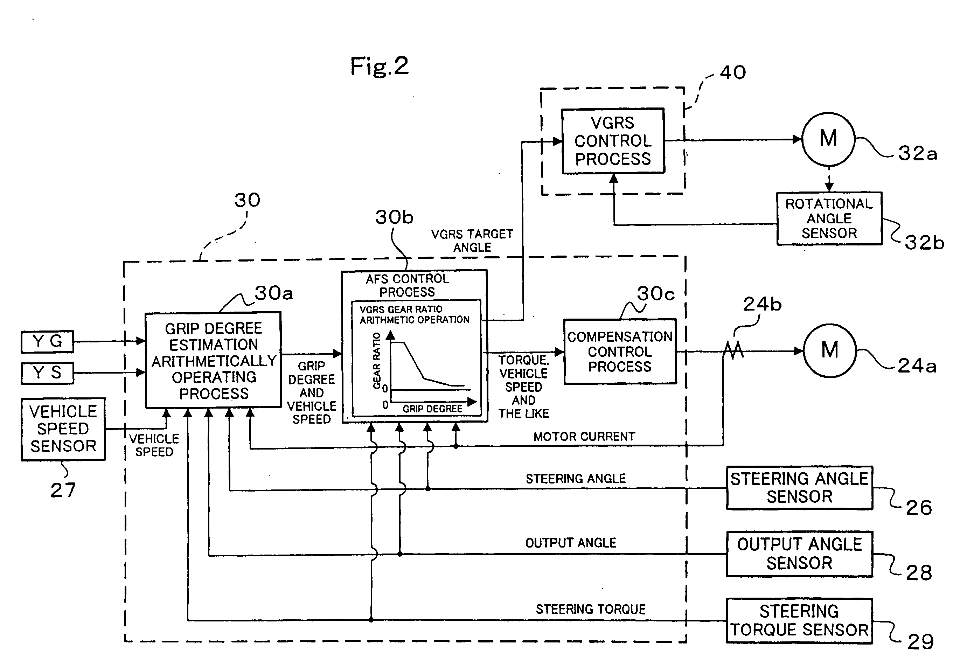

As shown in Figs. 1 and 2, the steering apparatus 20 is electrically constituted by the AFS_ECU 30, the VGRS_ECU 40, the steering angle sensor 26, the vehicle speed sensor 27, the output angle sensor 28, a steering torque sensor 29, a current sensor 24b, motors 24a and 32a, a lateral acceleration sensor YG, a yaw rate sensor YS and the like.

The steering angle sensor 26 shown in Fig. 1 detects a rotational angle of the first steering shaft 22, that is, a steering angle input to the gear ratio variable unit 32, and outputs a steering angle signal to the AFS_ECU 30, as shown in Fig. 2. On the other hand, the output angle sensor 28 shown in Fig. 1 detects a rotational angle of the second steering shaft 23, that is, an output angle output from the gear ratio variable unit 32, and outputs an output angle signal to the AFS_ECU 30, as shown in Fig. 2. Further, the steering torque sensor 29 detects a steering torque applied to the first steering shaft 22, and outputs a steering torque signal to the AFS_ECU 30. Further, the vehicle speed sensor 27 shown in Fig. 1 outputs a detected vehicle speed signal to the AFS_ECU 30, as shown in Fig. 2. In this case, although an illustration is omitted in Fig. 1, the current sensor 24b detecting the motor current flowing through the motor 24a also outputs a detected motor current signal to the AFS_ECU 30, as shown in Fig. 2. Further, the yaw rate sensor YS detecting ayaw rate of the vehicle and the lateral acceleration sensor YG detecting a lateral acceleration of the vehicle also output detected signal to the AFS_ECU 30 respectively.

Accordingly, since the steering angle, the output angle , the steering torque, the vehicle speed and the motor current are input to the AFS_ECU 30 respectively as the signals, it is possible to arithmetically operate a current command value which can generate an assist force in correspondence to the steering state, the vehicle speed and the motor current in the motor 24a on the basis of the AFS control process by means of the AFS_ECU 30, and apply a compensation control process 30c such as a phase compensation, a damper compensation and the like by the AFS_ECU 30 to the current command value so as to output to a motor drive circuit (not shown), thereby controlling the motor 24a.

Further, as shown in Fig. 2, in the AFS_ECU 30, there is executed a grip degree estimating and arithmetically operating process 30a of estimating and arithmetically operating the grip degree of the steered wheel on the basis of the yaw rate, the lateral acceleration, the vehicle speed and the motor current.

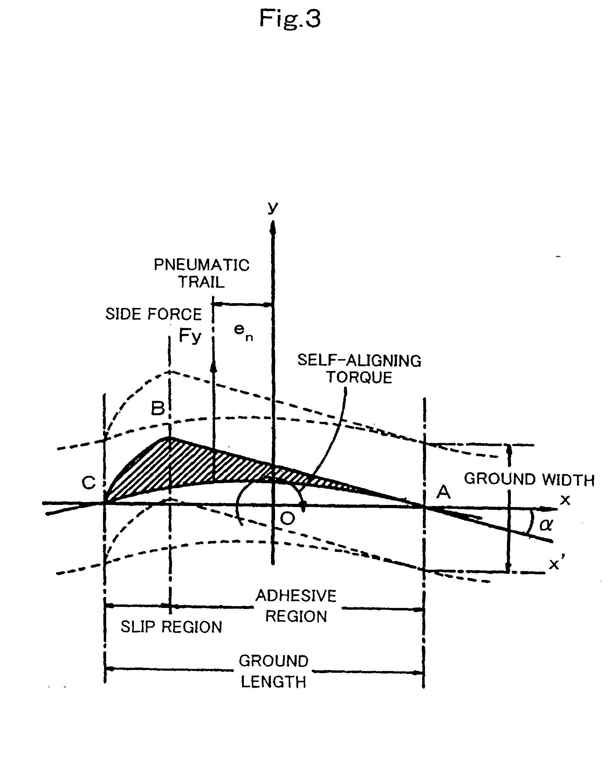

In this case, a description will be given of the estimation of the grip degree mentioned above with reference to Figs. 3 to 5. First, in pages 179 to 180 of Automotive Engineering Handbook (First Part Issue) Base and Theory Part (Issued by Society of Automotive Engineers of Japan in December 1, 1990 as First Edition), a state in which a tire rolls while slipping sideways at an angle of sideslip α is described as shown in Fig. 3.

In other words, in Fig. 3, a tread surface of a tire shown by a broken line is contacted with a road surface in a front end of a contact surface including a point A in Fig. 3, and is adhered to the road surface until a point B, and moves to a tire forward moving direction. The tread surface starts slipping at a point where a deforming force caused by a shear deformation in a lateral direction becomes equal to a frictional force, and is apart from the road surface at a rear end including a point C so as to be returned to an original state. At this time, a force Fy (a side force) generated by an entire ground surface is obtained by a product of a deforming area (a hatched part in Fig. 3) in a lateral direction of the tread portion and an elastic constant in a lateral direction of the tread portion per a unit area. As shown in Fig. 3, a point of application of the side force Fy exists in a rear side (a leftward direction in Fig. 3) by en (pneumatic trail) from a point (a point O) just below a tire center line. Accordingly, the moment Fy · en at this time may correspond to a self-aligning torque (Tsa) , and is applied in a direction of reducing the lateral slipping angle α.

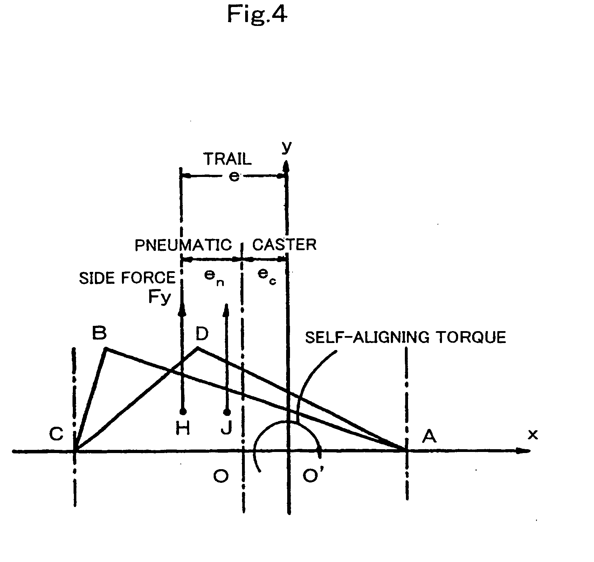

Next, a description will be given of the case that the tire is attached to the vehicle with reference to Fig. 4 which is obtained by simplifying Fig. 3. In the steered wheel of the vehicle, in order to improve return of a steering wheel (a handle), the caster trail ec is provided normally at a caster angle. Accordingly, the contact point of the wheel is a point O', and a moment which intends to restore the steering wheel is Fy · (en + ec).

When the grip state in the lateral direction of the tire is lowered, and the slip area is expanded, the deformation in the lateral direction of the tread portion comes into a shape ADC from a shape ABC in Fig. 4. As a result, the point of application of the side force Fy moves to a front side (to a point J from a point H in Fig. 4) with respect to the vehicle forward mowing direction. In other words, the pneumatic trail en becomes small. Accordingly, in the case that the adhesive area is large and the slipping area is small (in other words, in the case that the lateral grip of the tire is high) even if a uniform side force Fy is applied, the pneumatic trail en becomes large, and a self-aligning torque Tsa becomes large. On the contrary, when the grip in the lateral direction of the tire is lost, and the slipping area is increased, the pneumatic trail en becomes small, and the self-aligning torque Tsa is reduced.

As mentioned above, paying attention to the change of the pneumatic trail en, it is possible to detect a level of the grip degree in the lateral direction of tire. Further, since the change of the pneumatic trail en appears in the self-aligning torque Tsa, it is possible to estimate the grip degree expressing the level of the grip in the lateral direction with respect to the wheel in the front side of the vehicle (hereinafter, refer to "grip degree"), on the basis of the self-aligning torque Tsa. Further, the grip degree can be estimated on the basis of an extra degree of the side force with respect to the road surface friction as mentioned below.

In this case, a lateral force usage rate or a lateral G usage rate is employed in Japanese Unexamined Patent Publication No. HEI 11-99956, however, the grip degree mentioned above is different from these rates in the following points. In the apparatus described in the publication, a maximum lateral force which can be generated in the road surface is calculated on the basis of the road surface friction coefficient µ. The road surface friction coefficient µ is estimated on the basis of a dependency on the road surface friction coefficient µ of a cornering power Cp (which is defined as a value of the side force at a time of a slip angle of 1 deg). However, the cornering power Cp is affected by a shape of the tire ground surface (a length and a width of the ground surface), an elasticity of the tread rubber and the like in addition to the road surface friction coefficient µ. For example, in the case that the water exists on the tread surface, or the tread rubber elasticity is changed due to a tire friction and a temperature, the change appears in the cornering power Cp even if the road surface friction coefficient µ is uniform. As mentioned above, the technique described in the publication does not take the characteristic of the rubber tire in the wheel into account.

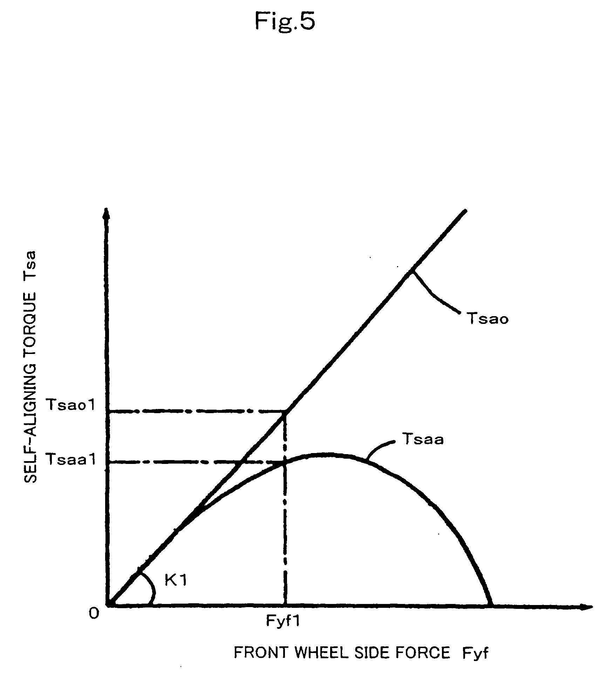

As is apparent from Figs. 3 and 4 mentioned above, the characteristic of the self-aligning torque with respect to the front wheel side force applied to the vehicle front wheel comes to a characteristic shown by Tsaa in Fig. 5. As mentioned above, in the case of setting the actual self-aligning torque to Tsaa and setting the front wheel side force to Fyr, a relation Tsaa = Fyf · (en + ec) is established. Accordingly, a nonlinear characteristic of the actual self-aligning torque Tsaa with respect to the front wheel side force Fyf expresses a direct change of the pneumatic trail en. Therefore, a slope K1 with respect to the front wheel side force Fyf near an origin 0 of the actual self-aligning torque Tsaa (in this case, the front wheel is in a gripped state) is identified, that is, a characteristic shown by the self-aligning torque characteristic (areference self-aligning torque Tsao) in a completely gripped state is determined. In this case, it is desirable that the slope K1 employs an experimentally determined predetermined value as an initial value, and is identified and compensated during a normal running where the grip degree is high. In this case , the actual self-aligning torque Tsaa is determined in accordance with an arithmetic operation mentioned below.

Further, the grip degree of the front wheel is estimated on the basis of the actual self-aligning torque Tsaa with respect to the reference self-aligning torque Tsao. For example, the grip degree ε can be determined as the formula ε = Tsaal/Tsaol, on the basis of the value Tsaol (= K1 · Fyf1) of the reference self-aligning torque Tsao and the value Tsaal of the actual self-aligning torque Tsaa, in the case that the front wheel side force is Fyf1.

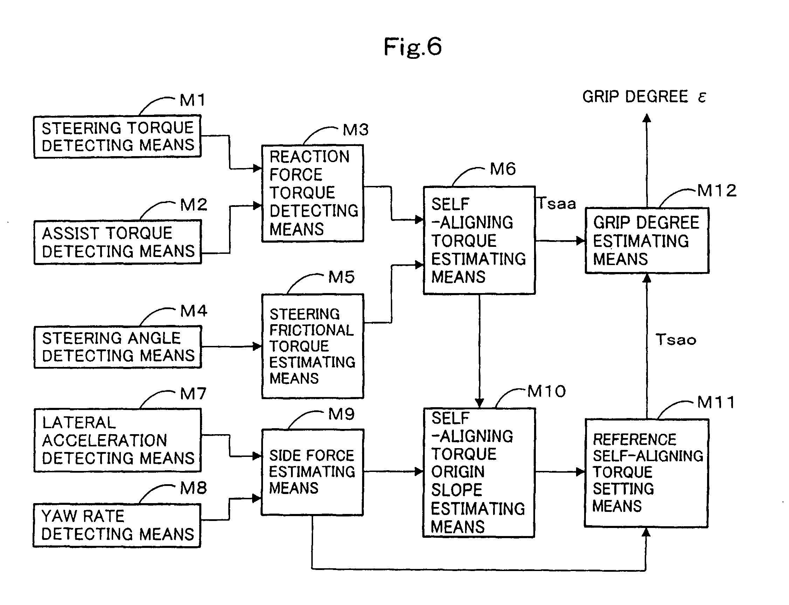

As mentioned above, the grip degree of the wheel can be estimated on the basis of the change of the self-aligning torque (the actual self-aligning torque Tsaa) with respect to the side force (the front wheel side force Fyr), however, this can be achieved in accordance with the structure shown in Fig. 6 , and a specific structure is illustrated in Fig. 2. First, in Fig. 6, a steering torque detecting means M11 and an assist torque detecting means M2 are provided as a steering force index detecting means for detecting at least one steering force index (for example, a steering torque) in steering force indexes including a steering torque and a steering force applied to a steering system from the steering wheel (not shown) of the vehicle to a suspension (not shown). A reaction force torque is detected by a reaction force torque detecting means M3 on the basis of the detected results.

In the present embodiment, for example, the steering torque sensor 29 shown in Fig. 2 may correspond to the steering torque detecting means M1. Further, the assist torque can be determined on the basis of a motor current of the motor 24a (corresponding to the assist torque detecting means M2).

Further, the steering angle sensor 26 may correspond to a steering angle detecting means M4 in Fig. 6, and a steering frictional torque is estimated by a steering frictional torque estimating means M5 on the basis thereof. In this case, this matter will be described later.

Accordingly, the actual self-aligning torque Tsaa generated in the vehicle front wheels FL and FR can be estimated by the self-aligning torque estimating means M6, on the basis of the detected results of the reaction force torque detecting means M3 and the steering frictional torque estimating means M5.

On the other hand, the present embodiment, a lateral acceleration detecting means M7 and a yaw rate detecting means M8 are provided as a vehicle state quantity detecting means for detecting a state quantity of the vehicle. At least one front wheel index (the front wheel side force Fyf in Fig. 6) of the front wheel indexes including the side force applied to the vehicle front wheels FL and FR and the front wheel slip angle can be estimated by a side force estimating means M9 corresponding to the front wheel index estimating means, on the basis of the detected signals.

The front wheel side force Fyf is estimated in accordance with a formula Fyf = (Lr · m · Gy + Iz · dγ/dt)/L, on the basis of the output results of the lateral acceleration detecting means M7 and the yaw rate detecting means M8. In this case, reference symbol Lr denotes a distance from a center of gravity to a rear wheel axis, reference symbol m denotes a vehicle mass, reference symbol L denotes a wheel base, reference symbol Iz denotes a yaw inertial moment, reference symbol Gy denotes a lateral acceleration, and reference symbol dγ/dt denotes a time differential value of a yaw rate.

Further, the reference self-aligning torque is set by the reference self-aligning torque setting means M11, on the basis of the actual self-aligning torque Tsaa estimated by the self-aligning torque Tsaa estimating means M6 and the front wheel side force Fyf estimated by the side force estimating means M9. For example, the slope near the origin of the self aligning torque is estimated by the self-aligning torque origin slope estimating means M10, and the reference self-aligning torque is set by the reference self-aligning torque setting means M11, on the basis of the slope and the front wheel side force. Further, the grip degree E with respect to the front wheel is estimated by the grip degree estimating means on the basis of the results obtained by comparing the reference self-aligning torque set by the reference self-aligning torque setting means M11 with the self-aligning torque estimated by the self-aligning torque estimating means M6.

In other words, in Fig. 6, the self-aligning torque slope K1 near the origin in Fig. 5 is determined on the basis of the actual self-aligning torque Tsaa estimated by the self-aligning torque estimating means M6, and the front wheel side force Fyf estimated by the side force estimating means M9. The reference self-aligning torque Tsao is determined as the formula Tsao = K1 · Fyf on the basis of the slope K1 and the front wheel side force Fyf, and is compared with the actual self-aligning torque Tsaa. The grip degree ε is determined as the formula ε = Tsaa/Tsao on the basis of the results of comparison.

As mentioned above, the present embodiment, since a drive current of the motor 24a has a proportional relation to the assist torque, it is possible to easily estimate the reaction force torque on the basis of the assist torque and the detected results of the steering torque detecting means M1. Further, it is necessary to compensate the torque caused by the friction of the steering system, however, since a difference between a reaction force torque maximum value at a time of additionally turning the steering wheel and a reaction force torque at a time of steering back the steering wheel is arithmetically operated as a frictional torque by the steering frictional torque estimating means M5 , and the frictional torque is sequentially compensated, it is possible to suitably estimate the self-aligning torque (the actual self-aligning torque Tsaa). As a matter of fact, the present invention is not limited to this, for example, a load cell or the like is attached to the steering shaft (not shown), or a strain gauge is provided in the suspension member, whereby the self-aligning torque is measured from the detected signals.

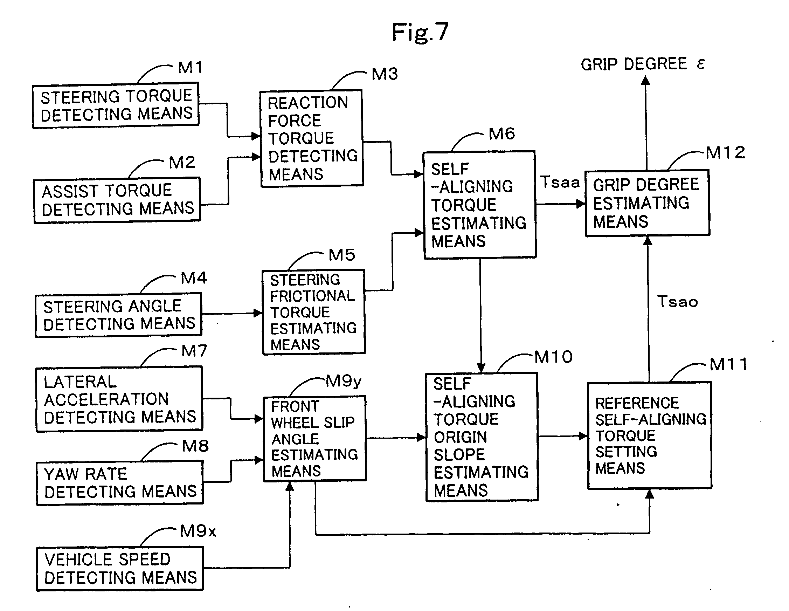

Next, Figs. 7 to 12 relate to another aspect of the grip degree estimation of the present invention, and show the structure in which a front wheel slip angle is employed as the front wheel index. Fig. 7 is a block diagram of a means for estimating the grip degree on the basis of the front wheel slip angle and the self-aligning torque. The blocks M1 to M6 are the same as those in Fig. 6, the reaction force torque and the steering system frictional torque are arithmetically operated, and the self-aligning torque is estimated. On the other hand, since the front wheel slip angle is determined on the basis of the steering angle, the yaw rate, the lateral acceleration and the vehicle speed, the detected signal of the steering angle detecting means M4, the lateral acceleration detecting means M7 and the yaw rate detecting means M8 are input to the front wheel slip angle estimating means M9y together with a detected signal of a vehicle speed detecting means M9x, in the same manner as that in Fig. 6.

In a front wheel slip angle estimating means M9y, first, a vehicle body slip angle speed dβ/dt is determined on the basis of the yaw rate, the lateral acceleration and the vehicle speed, and a vehicle slip angle β is determined by integrating the vehicle body slip angle speed dβ/dt. A wheel slip angle, in particular, a slip angle of a front wheel (hereinafter, refer to as a front wheel slip angle) αf is arithmetically operated from the vehicle speed, the steering angle and the vehicle data on the basis of the vehicle body slip angle β. In this case, the vehicle body slip angle β may be estimated on the basis of the vehicle model or arithmetically operated on the basis of a combination of the estimation and an integrating method, in addition to the method in accordance with the integration.

The origin slope of the self-aligning torque is identified by the self-aligning torque origin slope estimating means M10 on the basis of the self-aligning torque estimated in the manner mentioned above and the front wheel slip angle αf, and the reference self-aligning torque is set by the reference self-aligning torque setting means M11, on the basis of the slope and the front wheel slip angle. Further, the grip degree ε with respect to the front wheel is estimated by the grip degree estimating means M12 on the basis of the result of comparison between the reference self-aligning torque set by the reference self-aligning torque setting means M11 and the self-aligning torque estimated by the self-aligning torque estimating means M6.

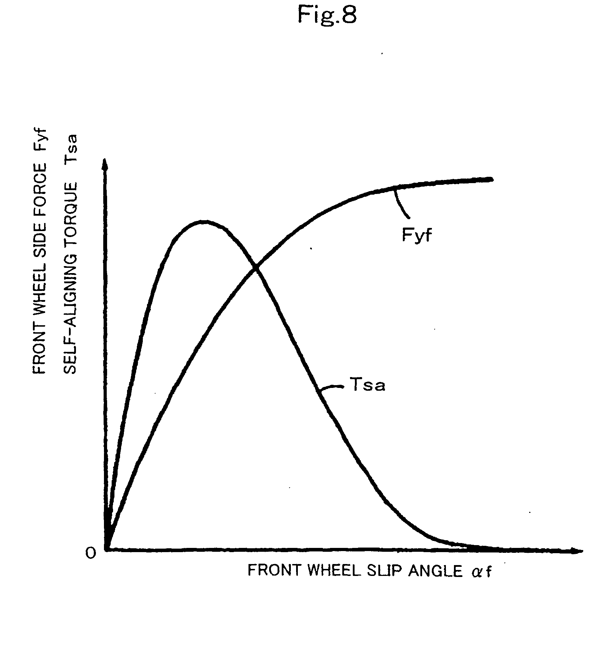

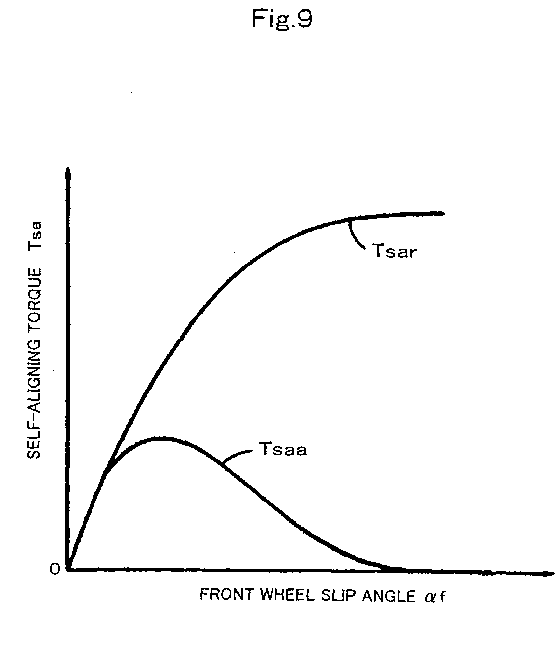

A description will be in detail given below of the estimation of the grip degree ε in the embodiment described in Fig. 7, with reference to Figs. 8 to 12. First, a relation between the front wheel side force Fyf with respect to the front wheel slip angle αf and the self-aligning torque Tsa shows a non linear characteristic with respect to the front wheel slip angle αf as shown in Fig. 8. Since the self -aligning torque Tsa is obtained by the product of the front wheel side force Fyf and the trail e (= en + ec), the self-aligning torque characteristic in the case that the wheel (the front wheel) is in the grip state, that is, in the case that the pneumatic trail en is in the completely grip state, shows a nonlinear characteristic shown by Tsar in Fig. 9.

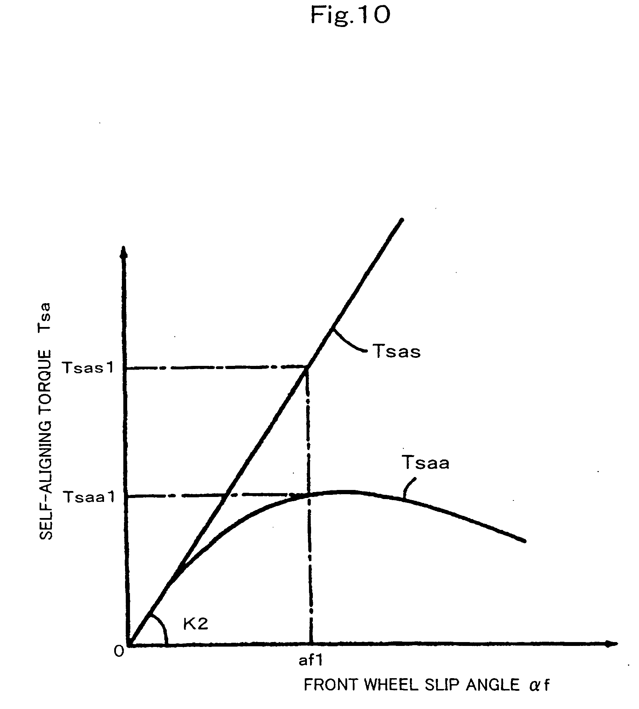

However, in the present embodiment, it is assumed that the self-aligning torque characteristic of the complete grip state is linear, a slope K2 of a self-aligning torque Tsa with respect to the front wheel slip angle near the origin is determined, as shown in Fig. 10, and a reference self-aligning torque characteristic (shown by Tsas in Fig. 10) is set. For example, in the case that the front wheel slip angle is αf1, the reference self-aligning torque is arithmetically operated in accordance with the formula Tsas 1 = K2 · αf1. Further, the grip degree ε is determined in accordance with the formula ε = Tsaa1/Tsas1 = Tsaa1/(K2 · αf1).

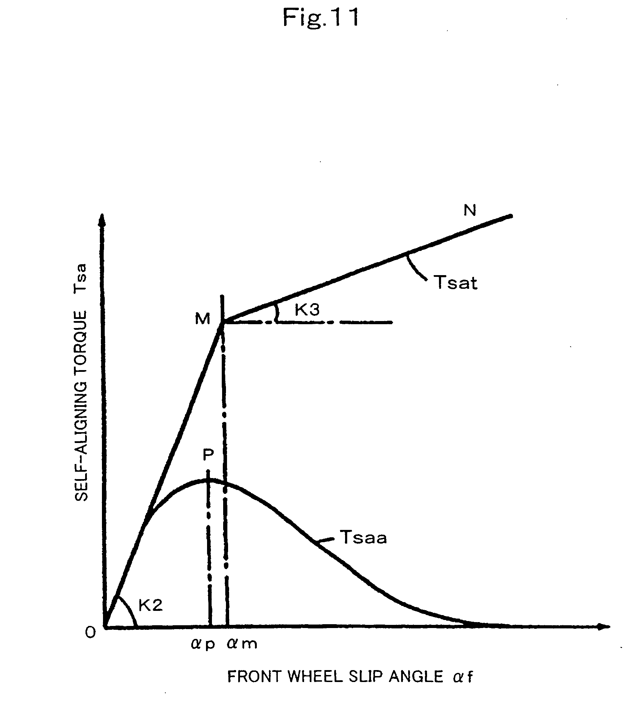

In accordance with the setting method of the reference self-aligning torque in Fig. 10, since it is assumed that the reference self-aligning torque characteristic is linear, an error at a time estimating the grip degree is increased in an area in which the front wheel slip angle αf is large, and there is a fear that an accuracy for estimating the grip degree is lowered. Accordingly, as shown in Fig. 11, in the case that the front wheel slip angle is equal to or more than a predetermined front wheel slip angle, it is desirable to set the self-aligning torque slope to K3 and set a nonlinear characteristic of the reference self-aligning torque characteristic similar to a linear characteristic as shown by 0-M-N in Fig. 11. In this case, it is desirable to previously determine and set the self-aligning torque slope K3 experimentally, and identify and compensate the slope K3 during running. Further, it is preferable that a point M is set on the basis of an inflection point (a point P) of the actual self-aligning torque. For example, the inflection point P of the actual self-aligning torque is determined, and the front wheel slip angle αm by a predetermined value larger is set as a point M on the basis of the front wheel slip angle αP of the inflection point P.

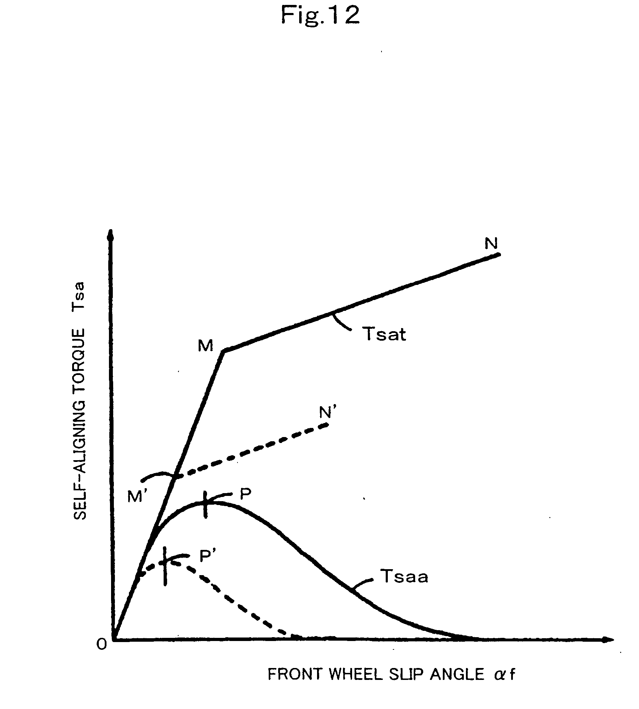

Further, since the reference self-aligning torque with respect to the front wheel slip angle is affected by the road surface friction coefficient µ, it is possible to set the accurate reference self-aligning torque characteristic by setting the reference self-aligning torque on the basis of the inflection point P of the actual self-aligning torque Tsaa as shown in Fig. 12. For example, in the case that the road surface friction coefficient becomes low, the characteristic of the actual self-aligning torque Tsaa is changed from a solid line in Fig. 12 to a broken line. In other words, when the road surface friction coefficient µ is lowered, the inflection point P of the actual self-aligning torque Tsaa is changed from the point P to a point P'.

Accordingly, it is necessary to change the reference self-aligning torque characteristic (Tsat) from 0-M-N to 0-M'-N'. In this case, since the point M' is set on the basis of the inflection point P' as mentioned above, it is possible to set the reference self-aligning torque characteristic following to the change of the road surface friction coefficient.

In the embodiment mentioned above, paying attention to the change of the pneumatic trail in the tire, the grip degree ε is determined on the basis of the self-aligning torque, however, it is possible to estimate the grip degree (the grip degree in this case is set to εm) expressing the degree of the grip in the lateral direction applied to the wheel, on the basis of the extra degree of the side force with respect to the road surface friction.

First, in accordance with a theoretical model (a brush model) of the tire generation force, a relation between the front wheel side force Fyf and the self-aligning torque Tsaa is expressed by the following formulae (1) to (4). In otherwords, in the case that ξ =1- {Ks/(3 · µ · Fz)} · λ is established, the following formula (1) is established in the case that ξ > 0, the following formula (2) is established in the case that ξ ≦ 0, the following formula (3) is established in the case that ξ > 0, the following formula (4) is established in the case that ξ ≦ 0.$\text{Fyr = µ · Fz · (1 - ξ3)}$$\text{Fyf = µ · Fz}$$\text{Tsaa = (l · Ks/6) · λ · ξ3}$$\text{Tsaa = 0}$

In this case, reference symbol Fz denotes a ground load, reference symbol 1 denotes a ground length of the tire ground surface, reference symbol Ks denotes a constant corresponding to a tread rigidity, reference symbol λ denotes a lateral slip (λ = tan(αf), and reference symbol αf denotes a front wheel slip angle.

Since the front wheel slip angle αf is small generally in the area ξ > 0, λ = αf can be assumed. As is apparent from the formula (1) mentioned above, since the maximum value of the side force is obtained by µ · Fz, a rate with respect to the maximum value of the side force in correspondence to the road surface friction coefficient µ, which is set as a road surface friction capacity factor η, can be expressed by the formula η = 1 - ξ3. Accordingly, the formula εm = 1 - η may correspond to a road surface friction extra degree, and on the assumption that the εm is the grip degree of the wheel, the formula εm = ξ3 is established. Accordingly, the formula (3) mentioned above can be expressed by the following formula (5).$\text{Tsaa = (l · Ks/6) · αf · εm}$

The formula (5) mentioned above shows that the self-aligning torque Tsaa is in proportion to the front wheel slip angle αf and the grip degree εm. In this case, on the assumption that the characteristic in the grip degree εm = 1 (the friction capacity factor of the road surface is zero, that is, the friction extra degree is 1) is areference self-aligning torque characteristic, the following formula (6) is established.$\text{Tsau = (l · Ks/6) · αf}$

Accordingly, the grip degree εm can be determined as the following formula (7) on the basis of the formulae (5) and (6) mentioned above.$\text{εm = Tsaa/Tsau}$

As is apparent from the matter that the road surface friction coefficient µ is not included as the parameter in this formula (7), the grip degree εm can be calculated without using the road surface friction coefficient µ. In this case, a slope K4 (= 1 · Ks/6) of the reference self-aligning torque Tsau can be previously set by using the brush model mentioned above. Further, it can be experimentally determined. Further, in the case of first setting an initial value, identifying the slope of the self-aligning torque near the front wheel slip angle of zero during running and compensating the slope, it is possible to improve a detecting accuracy.

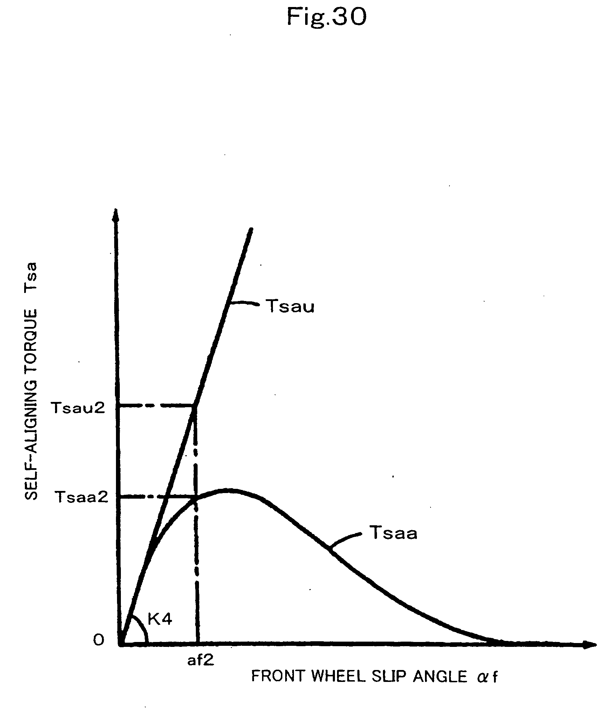

For example, in the case that the front wheel slip angle is αr2 in Fig. 30, the reference self-aligning torque can be arithmetically operated in accordance with the formula Tsau2 = K4 · αf2. Further, the grip degree εm can be determined as the formula εm = Tsaa2/Tsau2 = Tsaa2/(K4 · αf2).

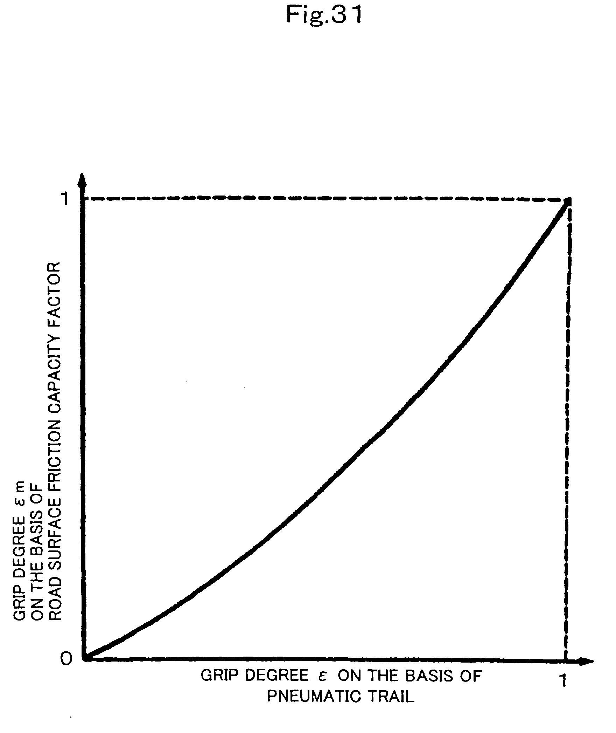

Accordingly, it is possible to use the grip degree Em on the basis of the road surface friction extra degree, in place of the grip degree ε on the basis of the pneumatic trail described in Figs. 3 to 11 mentioned above. Further, the grip degree ε and the grip degree εm mentioned above has a relation shown in Fig. 31. Accordingly, it is possible to convert the grip degree ε into the grip degree εm by determining the grip degree ε, or on the contrary it is possible to convert the grip degree εm into the grip degree ε by determining the grip degree εm.

In this case, if the grip degree is estimated by comparing the actual self-aligning torque with the reference self-aligning torque as mentioned above, it is possible to estimate the grip degree ε of the wheel on the basis of the pneumatic trail change without determining the maximum force which can be generated by the wheel as in the related art (for example, Japanese Unexamined Patent Publication No. HEI 11-99956), that is, the road surface friction coefficient µ. Accordingly, a robustness in estimation is higher than the conventional method of determining the road surface friction coefficient, and an accuracy is higher.

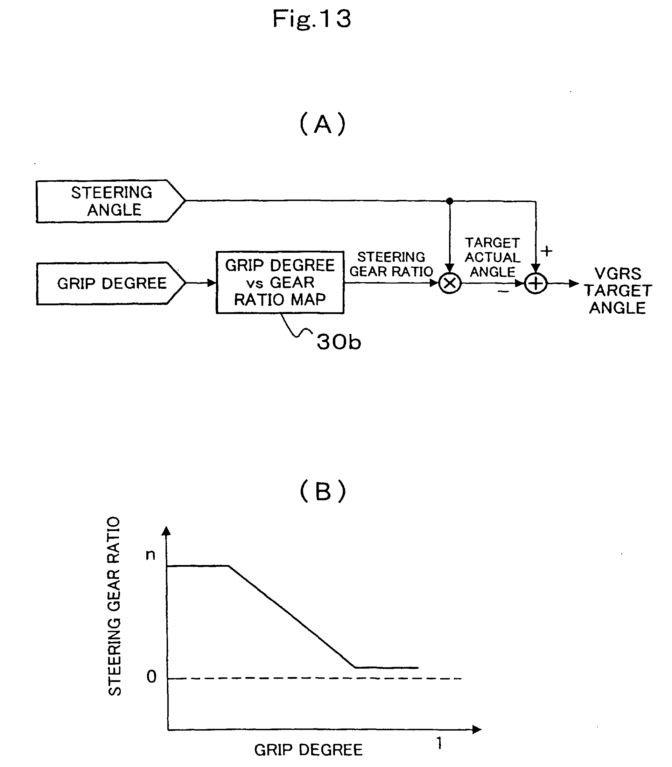

Since the grip degree obtained as the result of arithmetic operation by the grip degree estimation arithmetic operating process 30a is input to the AFS control process as mentioned above, the steering gear ratio of the gear ratio variable unit 32 is determined on the basis of the input grip degree from the grip degree vs gear ratio map 30b (refer to Fig. 13B) capable of determining the gear ratio with respect to the grip degree, in the AFS control process. As shown in Fig. 13A, the VGRS target angle is calculated by multiplying the steering gear ratio determined by the grip degree vs gear ratio map 30b by the steering angle and subtracting the steering angle from the result. The VGRS target angle is output to the VGRS_ECU 40.

On the other hand, as shown in Fig. 2, since the VGRS target angle output from the AFS_ECU 30 is input to the VGRS_ECU 40, the motor 32a is controlled by arithmetically operating the current command value applied to the motor 32a installed in the gear ratio variable unit 32 shown in Fig. 1 in accordance with the VGRS control process and outputting the value to the motor drive circuit. In this case, since the rotational angle of the motor 32a is detected by the rotational angle sensor 32b so as to be output as the motor angle signal to the VRRS_ECU 40, a feedback control of the motor 32a by the VGRS_ECU 40 can be executed on the basis of a closed loop structured thereby.

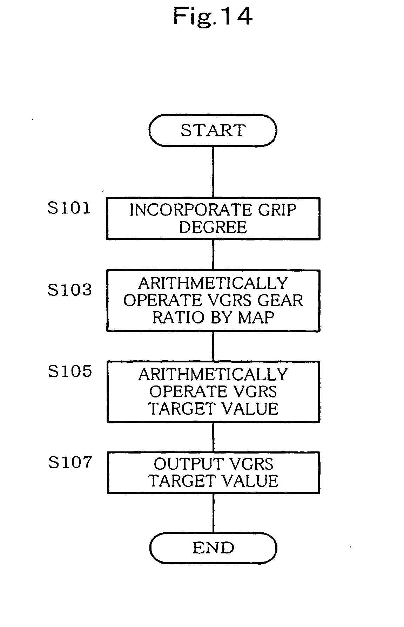

A steering gear ratio setting process shown in Fig. 14 is executed by the AFS_ECU 30 of the steering apparatus 20 structured as mentioned above. In this case, the steering gear ratio setting process is similar to an interrupt process which is repeatedly executed every fixed time, and a description of series of main routines will be omitted.

As shown in Fig. 14, the grip degree incorporating process of the steered wheel is executed first in a step S101 after a predetermined initializing process. This process is a process of acquiring the grip degree estimated by the grip degree estimation arithmetically operating process 30a mentioned above, and the grip degree acquired by this process is used for a VGRS gear (a steering gear ratio) map arithmetic operation by the next step S103.

In the step S103, there is executed a VGRS gear map arithmetic operation of executing an arithmetic operation for setting the steering gear ratio of the gear ratio variable unit 32 on the basis of the grip degree incorporated in accordance with the step S101. In this process, the steering gear ratio is determined on the basis of the grip degree by referring to the grip degree vs gear ratio map 30b exemplified in Fig. 13B.

As is known from the grip degree vs gear ratio map 30b, a corresponding relation between both the elements is mapped such that near an approximately middle of the grip degree, the smaller the grip degree is, the larger the steering gear ratio is, and the larger the grip degree, the smaller the steering gear ratio is, near the lower limit range of the grip degree, the steering gear ratio is fixed to a maximum value, and near the lower limit range, the steering gear ratio is fixed to a minimum value. In other words, the mapping is executed such that the steering gear ratio is increased in the case that the grip state of the steered wheel comes close to the grip limit (the grip state just before the steered wheel starts slipping on the ground surface due to a matter that the grip degree becomes equal to or less than a certain threshold value).

In the next step S105, the VGRS target value arithmetic operation is executed. The process executes the arithmetic operation of the VGRS target value (the VGRS target angle) on the basis of the structure shown in Fig. 13A, and the VGRS target value (the VGRS target angle) is calculated by multiplying the steering gear ratio set in accordance with the step S103 and the steering angle detected by the steering angle sensor 26, and subtracting the target actual steering angle corresponding to the multiplied result from the steering angle detected by the steering angle sensor 26.

When the VGRS target value is arithmetically operated in the step S107, a process of outputting the VGRS target value to the VGRS_ECU 40 is executed in the step S107. Accordingly, since the VGRS target value (the VGRS target value) is input to the VGRS_ECU 40, the current command value with respect to the motor 32a of the gear ratio variable unit 32 is arithmetically operated in accordance with the VGRS control process as mentioned above, and is output to the motor drive circuit (not shown) so as to control the motor 32a.

As described above, in the steering apparatus 20 on the basis of the first embodiment, it is possible to estimate the grip degree between the ground surface (the road surface) on which the steered wheel is grounded and the steered wheel in the grip degree estimating process 30a which is arithmetically operated by the AFS_ECU 30, and set the steering gear ratio of the gear ratio variable unit 32 on the basis of the estimated grip degree in accordance with the grip degree vs gear ratio map 30b, for example, set the VGRS target angle (the steering gear ratio) such that the steering gear ratio is increased in the case that the grip degree is close to the grip limit of the steered wheel. Accordingly, since it is possible to estimate the grip degree which is changed in correspondence to the magnitude of the road surface µ, it is possible to increase the steering gear ratio so as to set the steering gear ratio large even at a time of a low speed running, for example, in the case that the steered wheel is close to the grip limit. Therefore, in the low µ road surface running or the like, since it is possible to prevent the phenomenon that the steered wheel is turned largely by a reduced steering angle from being generated, there can be obtained an effect of improving the stability of the vehicle motion.

In this case, in the first embodiment mentioned above, the grip degree estimation arithmetically operating process 30a and the VGRS target value arithmetic operation are arithmetically operated by the AFS_ECU 30, however, the structure is not limited to this, the structure maybe made such that the grip degree estimation arithmetically operating process 30a is executed by the other CPU than the AFS_ECU 30, for example, the VRGS_ECU 40 and the other CPU. Even in this case, the same operations and effects as those mentioned above can be obtained.

### [Second Embodiment]

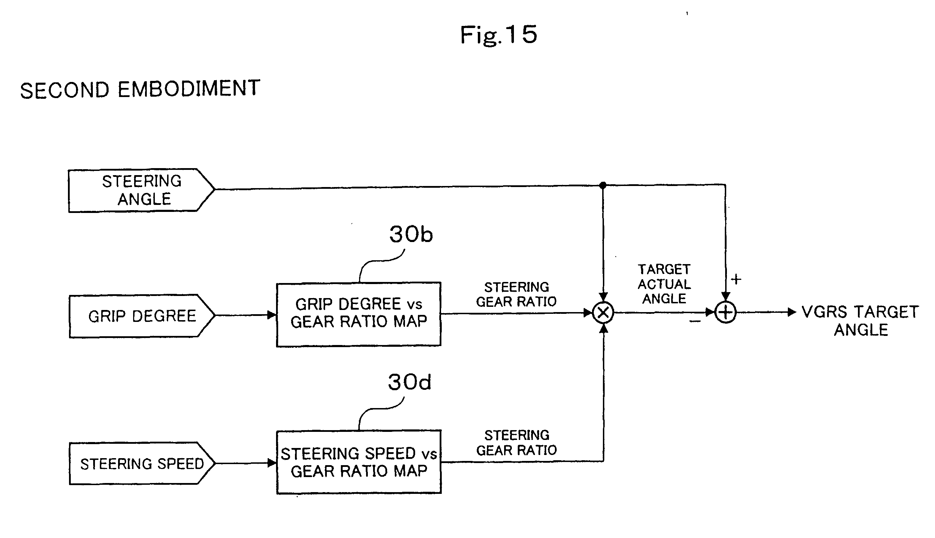

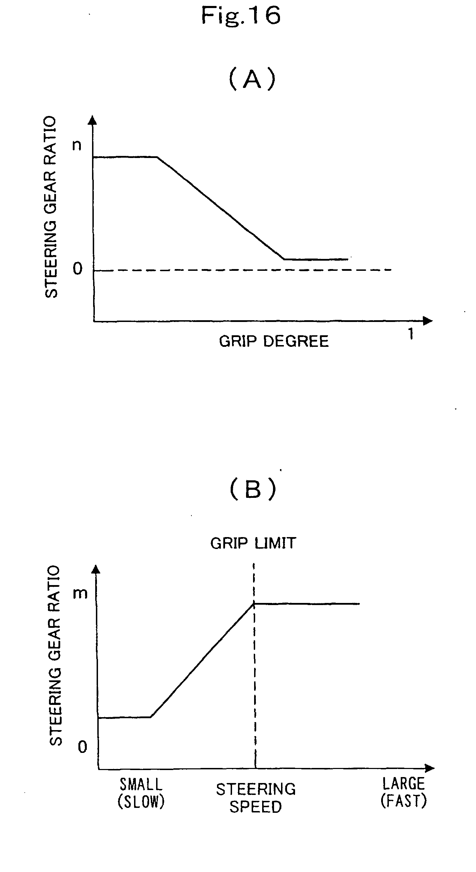

Next, a description will be given of a steering apparatus of a second embodiment on the basis of Figs. 15 and 16. In this case, the steering apparatus of the second embodiment may correspond to a steering apparatus stated in claim 1 or 3.

The steering apparatus of the second embodiment is different from the steering apparatus of the first embodiment in a point that a steering speed vs gear ratio map 30d is added to the grip degree vs gear ratio map 30b in the AFS control process executed by the AFS_ECU 30 of the steering apparatus 20 of the first embodiment mentioned above. Accordingly, since the other constitutingparts are substantially the same as the structures of the steering apparatus 20 of the first embodiment, the description thereof will be omitted, and a description will be given with reference to Figs. 1 and 2 as occasion demands.

As shown in Fig. 15, in the steering apparatus of the second embodiment, the VGRS target angle is calculated by multiplying three elements comprising the steering gear ratio determined in accordance with the grip degree vs gear ratio map 30b, the steering gear ratio determined in accordance with the steering speed vs gear ratio map 30d and the steering angle, and subtracting the steering angle from the results obtained thereby. In this case, the steering speed is calculated by differentiating by time on the basis of the steering angle signal detected and output by the steering angle sensor 26 in accordance with the AFS_ECU 30.

In other words, in addition to the grip degree vs gear ratio map 30b used in the steering apparatus 20 of the first embodiment shown in Fig. 16A, there is used the steering speedvs gear ratio map 30d having such a corresponding relation that the steering gear ratio is increased in accordance with the increase of the steering speed, as shown in Fig. 16B. Accordingly, in the case that the grip degree is lowered, since it is possible to set such that the steering gear ratio is increased in the case that the rapid steering is executed, by using the steering speed signal, it is possible to improve a stability of the vehicle motion with respect to the rapid steering, in comparison with the steering apparatus 20 of the first embodiment in which the steering gear ratio is set only by using the grip degree vs gear ratio map 30b.

As mentioned above, in accordance with the steering apparatus on the basis of the second embodiment, when the grip degree comes close to the grip limit of the steered wheel in accordance with the grip degree estimation arithmetically operating process 30a arithmetically operated by the AFS_ECU 30, the VGRS target angle (the steering gear ratio) is set such that the steering gear ratio is increased, on the basis of the steering speed obtained by detecting and time differentiating by means of the steering angle sensor 26. Accordingly, for example, it is possible to set the VGRS target angle such that the steering gear ratio is further increased in correspondence to the increase of the steering speed. Therefore, since it is possible to prevent the phenomenon that the steered wheel is largely turned even at a time of the rapid steering under the low µ road surface running or the like, it is possible to obtain an effect of improving the stability of the vehicle motion.

### [Third Embodiment]

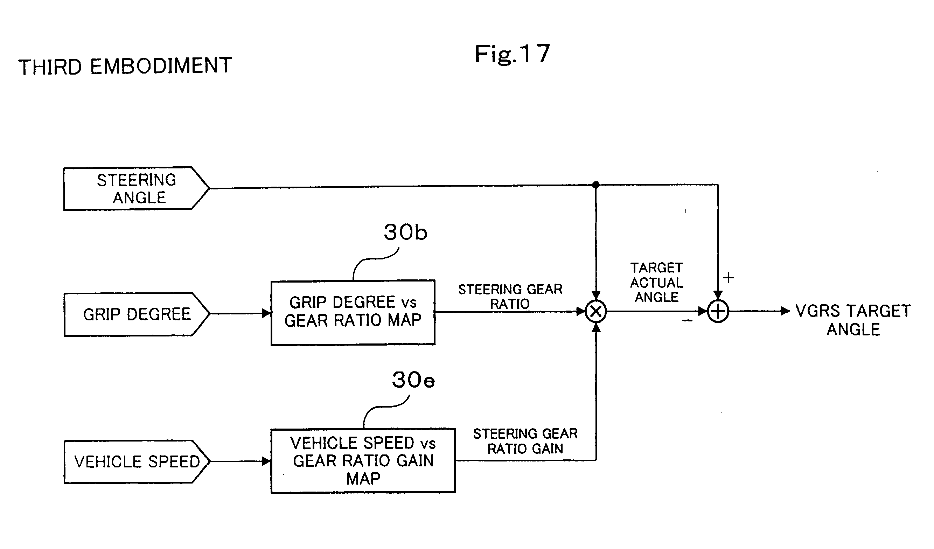

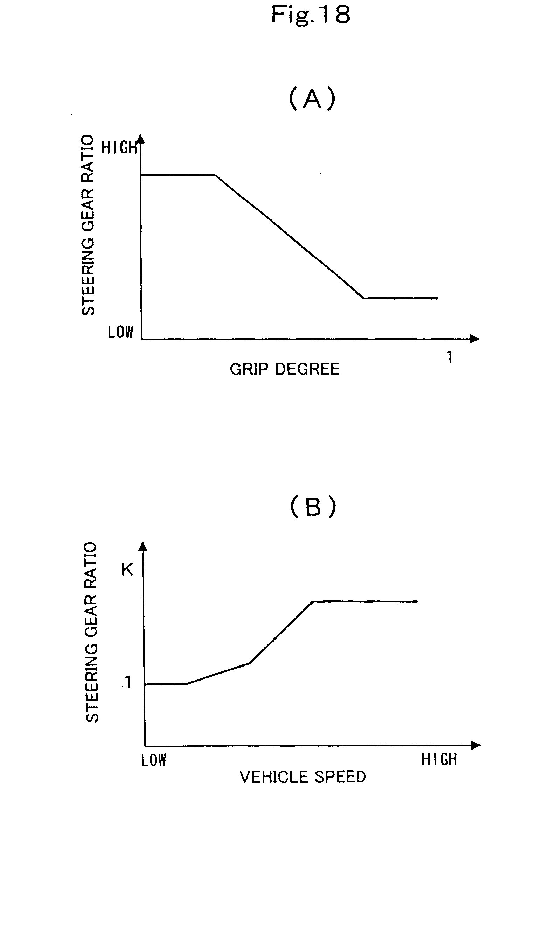

Next, a description will be given of a steering apparatus of a third embodiment on the basis of Figs. 17 and 18. In this case, the steering apparatus of the third embodiment may correspond to a steering apparatus stated in claim 1 or 4.

The steering apparatus of the third embodiment is different from the steering apparatus of the first embodiment in a point that a vehicle speed vs gear ratio gain map 30e is added to the grip degree vs gear ratio map 30b in the AFS control process executedby theAFS_ECU 30 of the steering apparatus 20 of the first embodiment mentioned above. Accordingly, since the other constituting parts are substantially the same as the structures of the steering apparatus 20 of the first embodiment, the description thereof will be omitted, and a description will be given with reference to Figs. 1 and 2 as occasion demands. In this case, the vehicle speed is arithmetically operated by the AFS_ECU 30 on the basis of the vehicle speed signal detected and output by the vehicle speed sensor 27.

As shown in Fig. 17, in the steering apparatus of the third embodiment, the VGRS target angle is calculated by multiplying three elements comprising the steering gear ratio determined in accordance with the grip degree vs gear ratio map 30b, the steering gear ratio determined in accordance with the vehicle speed vs gear ratio gain map 30e and the steering angle, and subtracting the steering angle from the results obtained thereby.

In other words, in addition to the grip degree vs gear ratio map 30b used in the steering apparatus 20 of the first embodiment shown in Fig. 18A, there is used the vehicle speed vs gear ratio gain map 30e having such a corresponding relation that the steering gear ratio gain is increased in accordance with the increase of the vehicle speed, as shown in Fig. 18B. Accordingly, since it is possible to set such that the steering gear ratio is increased in the accordance with the increase of the vehicle speed by using the vehicle speed information at a time of setting the steering gear ratio in correspondence to the grip degree, it is possible to apply the extra degree with respect to the steering operation of the driver changing in correspondence to the vehicle speed at a time of running on the road surface in which the grip degree of the low µ road or the like tends to be lowered much, in comparison with the steering apparatus 20 of the first embodiment in which the steering gear ratio is set simply using only the grip degree vs gear ratio map 30b. Further, it is accordingly possible to reduce the tension of the driver.

As mentioned above, in accordance with the steering apparatus on the basis of the third embodiment, when the grip degree comes close to the grip limit of the steered wheel in accordance with the grip degree estimation arithmetically operating process 30a arithmetically operated by the AFS_ECU 30, the VGRS target angle (the steering gear ratio) is set such that the steering gear ratio is increased, on the basis of the vehicle speed detected by the vehicle speed sensor 27. Accordingly, for example, since it is possible to set the VGRS target angle such that the steering gear ratio is further increased in correspondence to the increase of the vehicle speed, it is possible to set the VGRS target angle to a larger VGRS target angle (steering gear ratio) than that at a time of running at a middle or low speed, in the case of running at a high speed. Therefore, since it is possible to prevent the phenomenon that the steered wheel is largely turned even in the case of running on the low µ road surface, it is possible to obtain an effect of improving the stability of the vehicle motion.

### [Fourth Embodiment]

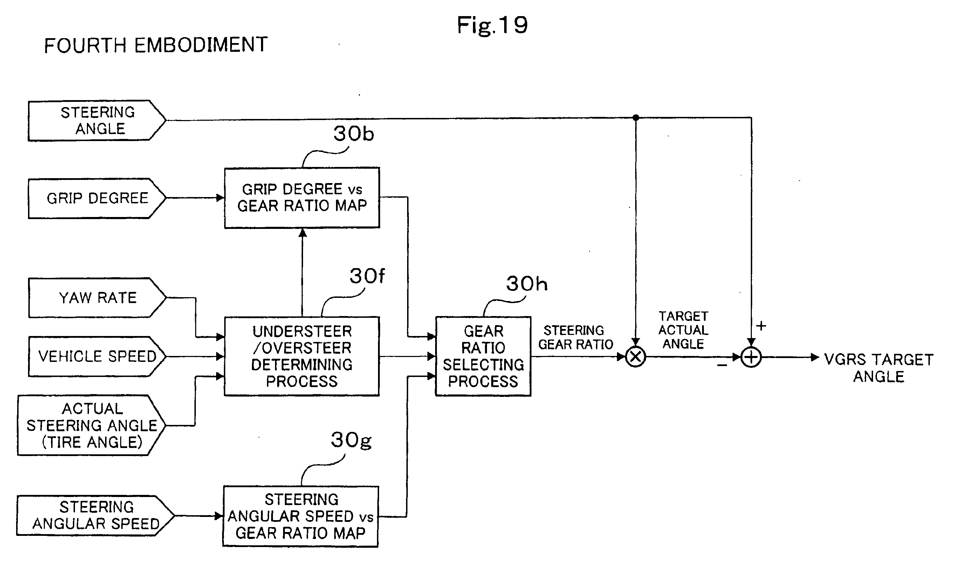

Next, a description will be given of a steering apparatus of a fourth embodiment on the basis of Figs. 19 to 24. In this case, the steering apparatus of the fourth embodiment may correspond to a steering apparatus stated in claim 1 or 5.

The steering apparatus of the fourth embodiment is different from the steering apparatus of the first embodiment in a point that an understeer/oversteer determining process 30f for determining a vehicle state, a steering angular speed vs gear ratio map 30g for setting a steering gear ratio with respect to a steering angular speed by the steering wheel 21 and a steering gear ratio selecting process 30h for selecting a steering gear ratio set thereby exist in addition to the grip degree vs gear ratio map 30b, in place of directly setting the steering gear ratio on the basis of the grip degree vs gear ratio map 30b, in the AFS control process executed by the AFS_ECU 30 of the steering apparatus 20 of the first embodiment mentioned above. Accordingly, since the other constituting parts are substantially the same as the structures of the steering apparatus 20 of the first embodiment, the description thereof will be omitted, and a description will be given with reference to Figs. 1 and 2 as occasion demands. In this case, the vehicle speed is arithmetically operated by the AFS_ECU 30 on the basis of the vehicle speed signal detected and output by the vehicle speed sensor 27. Further, a yaw rate shown in Fig. 19 is arithmetically operated on the basis of a yaw rate signal detected and output by a yaw rate sensor YS, and an actual steering angle is arithmetically operated on the basis of an output angle signal detected and output by an output angle sensor 28, respectively by the AFS_ECU 30.

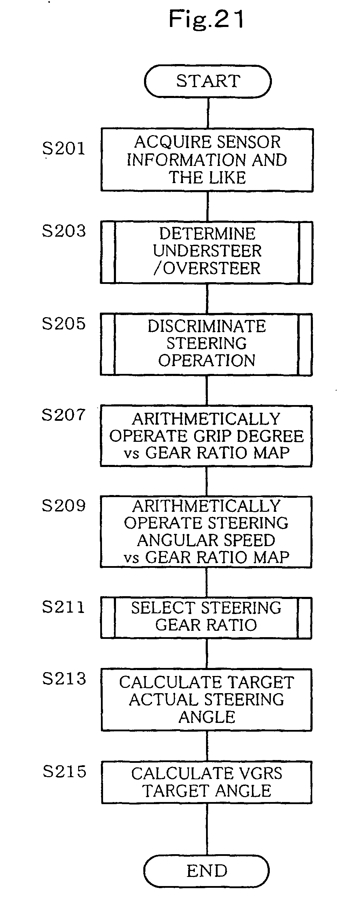

A description will be given of the steering gear ratio setting process executed by the AFS_ECU 30 of the steering apparatus of the fourth embodiment with reference to Figs. 21 to 24. In this case, the steering gear ratio setting process is similar to the interrupt process which is executed every fixed time, and a description of series of main routines will be omitted.

As shown in Fig. 21, after a predetermined initializing process, an acquiring process of the sensor information or the like is executed first of a step S201. In this process, respective sensor informations are input to the AFS_ECU 30 on the basis of respective sensor signals output from the steering angle sensor 26, the vehicle speed sensor 27, the output angle sensor 28, the yaw rate sensor YS and the like mentioned above.

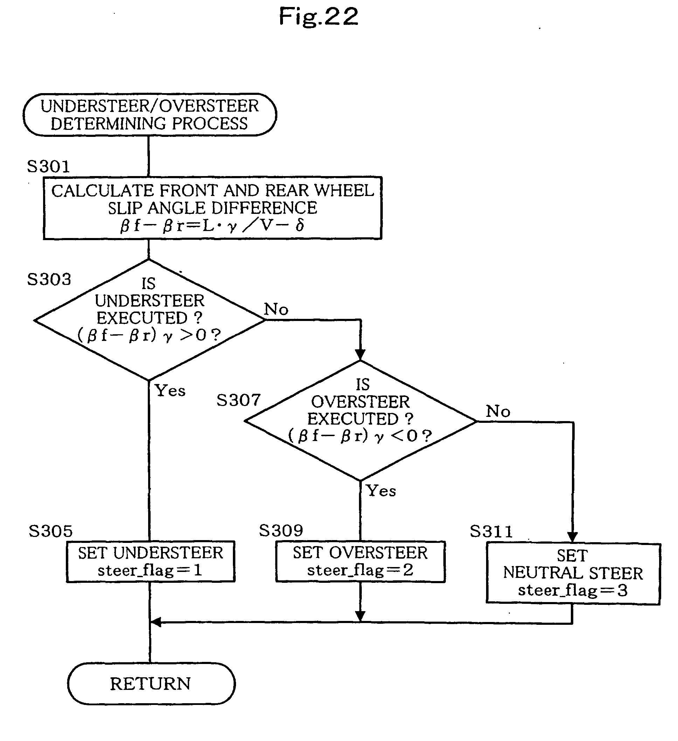

In the next step S203, an understeer/oversteer determining process is executed. The process is a sub-routine, and may correspond to the understeer/oversteer determining process 30f shown in Fig. 19. Since a flow of the process is shown in detail in Fig. 22, a description will be given of the flow of the understeer/oversteer determining process with reference to Fig. 22.

As shown in Fig. 22, in the understeer/oversteer determining process, a front and rear wheel slip angle difference calculating process is first executed a step S301. The process is executed by arithmetically operating a numerical expression (βf - βr = L · γ/V - δ). In this expression, reference symbol βf denotes a front wheel slip angle (deg), reference symbol βr denotes a rear wheel slip angle (deg), reference symbol L denotes a wheel base (nm), reference symbol γ denotes a yaw rate (deg/S), reference symbol V denotes a vehicle speed (m/S), and reference symbol δ denotes an actual steering angle (deg), respectively. In this case, on the basis of the numerical expression, it is understood that the understeer is established if a relation (βf - βr) · γ > 0 is established, and the oversteer is established if a relation(βf - βr) · γ < 0 is established, in accordance with a two-wheel model. Accordingly, it is determined in the following step S303 whether or not the relation (βf - βr) · γ > 0 is established, and it is determined in a step S307 whether or not the relation (βf - βr) · γ < 0 is established, respectively.

When it is determined in the step S303 that the relation (βf - βr) · γ > 0 is established ( Yes in the step S303), the understeer is established. Accordingly, a value 1 indicating the understeer is set to a steering flag (steer_flag) in accordance with a step S305. On the other hand, when it is not determined in the step S303 that the relation (βf - βr) · γ > 0 is established (No in the step S303), the step goes to the step S307 and it is determined whether or not oversteer is established.

When it is determined in the step S307 that the relation (βf - βr) · γ < 0 is established ( Yes in the step S307), the oversteer is established. Accordingly, a value 2 indicating the oversteer is set to a steering flag (steer_flag) in a step S309. On the other hand, when it is not determined in the step S307 that the relation (βf - βr) · γ < 0 is established (No in the step S307), a neutral state which is neither the understeer nor the oversteer is established. Accordingly, a value 3 indicating a neutral steer is set to the steering flag (steer_flag) in the succeeding step S311.

When setting the steering flag (steer_flag) in the steps S305, S309 and S311, the series of understeer/oversteer determining process is finished, and the process is returned to the steering gear ratio setting process to be loaded.

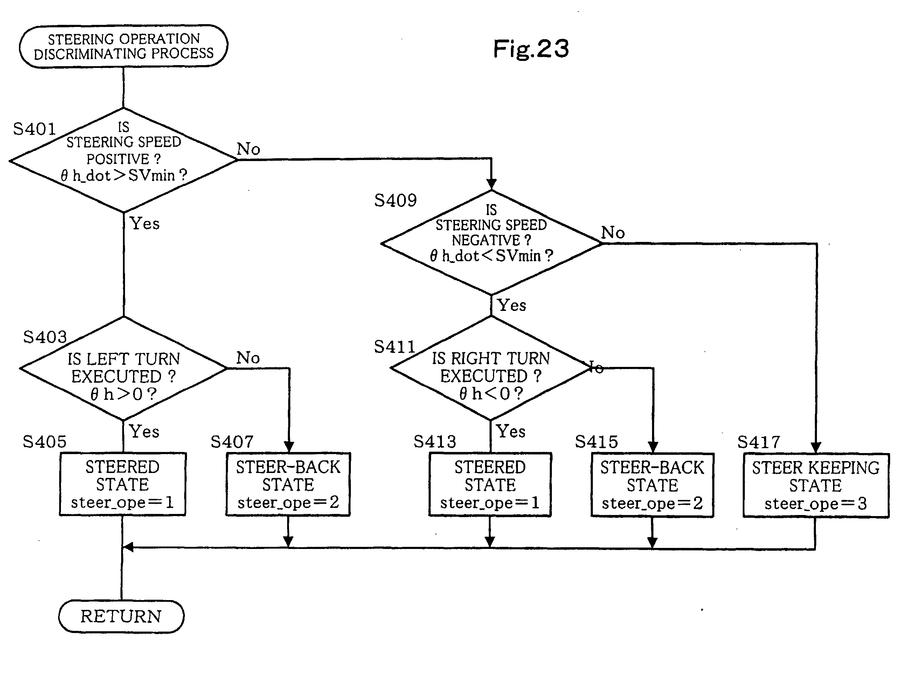

Turning back to Fig. 21, when finishing the understeer/oversteer determining process in the step S203, a steering operation discriminating process in a step S205 is next executed. This process is a sub-routine, and a flow of the process is shown in Fig. 23. In this case, a description will be given of a flow of the steering operation discriminating process with reference to Fig. 23.

As shown in Fig. 23, in the steering operation discriminating process, it is determined first in a step S401 on the bas is of the steering angle signal detected by the steering angle sensor 26 whether or not a steering speed corresponding to a time differentiated value of the steering angle is positive, that is , a relation θh_dot > SVmin is established. Since the steering speed is positive when the relation is established (Yes in the step S401), the process is changed to a step S403.

In the step 403, it is determined whether or not a steering direction by the steering wheel 21 is left turned in the case that the steering speed is positive, that is, a relation θh > 0 is established. When the relation is established (Yes in the step S403), the steering direction is left turned. Accordingly, the process is changed to a step S405, and a value 1 indicating a turned state is set to a steer operation flag (steer_ope).

Further, it is not determined in the determining process by the step S403 that the steering direction is left turned (No in the step S403), the steering direction is right turned. Accordingly, the process is changed to a step S407, and a value 2 indicating the turned state is set to the steer operation flag (steer_ope).

On the other hand, in the case that it is not determined in the determining process by the step S401 that the steering speed corresponding to the time differentiated value of the steering angle is positive (No in the step S401), the steering speed is negative or 0. Accordingly, the process is changed to a step S409 and it is determined whether or not the steering speed corresponding to the time differentiated value of the steering angle is negative, that is, a relation θh_dot < SVmin is established.

In the case that it can be determined in the step S409 that the relation θh_dot < SVmin is established (Yes in the step S409), the steering speed is negative. Accordingly, the process is changed to a step S411, and it is subsequently determined in the step S411 whether or not the steering direction by the steering wheel 21 is right turned, that is, a relation the steering angle θh < 0 is established. When the relation is established (Yes in the step S411), the steering direction is right turned. Accordingly, the process is changed to a step S413, and a value 1 indicating the turned state is set to the steer operation flag (steer_ope).

Further, in the case that it can not be determined in the determining process by the step S411 that the steering direction is right turned (No in the step S411), the steering direction is left turned. Accordingly, the process is changed to a step S415 and a value 2 indicating the turned state is set to the steer operation flag (steer_ope).

In the case that it can not be determined in the step S409 that the relation θh_dot < SVmin is established (No in the step S409), the step is changed to a step S417 and a value 3 indicating a steer keeping state is set to the steer operation flag (steer_ope).

When setting the steer operation flag (steer_ope) on the basis of the steps S405, S407, S413, S415 and S417, the series of steering operation discriminating process is finished, and the process is returned to the steering gear ratio setting process to be loaded.

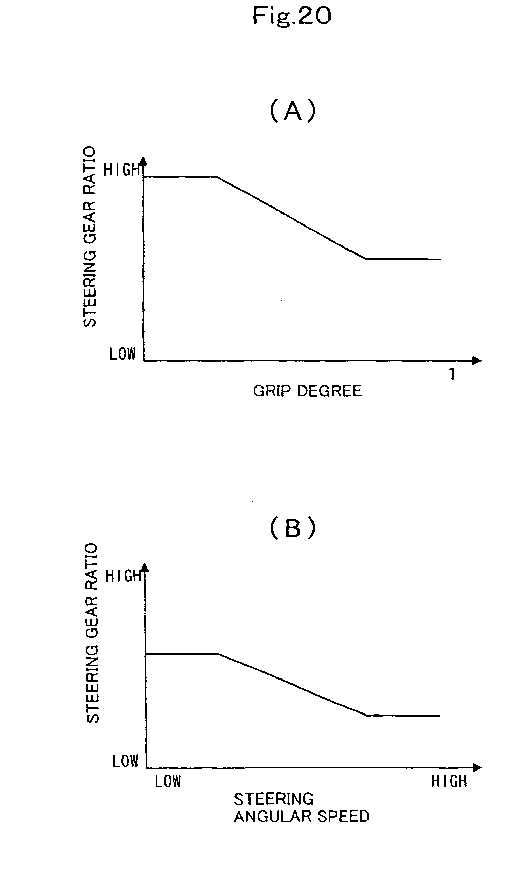

When again turning back to Fig. 21 and finishing the steering operation discriminating process in the step S205, there is next executed a gear ratio map arithmetically operating process applied to the grip degree in the step S207. This process may correspond to the grip degree vs gear ratio map 30b shown in Fig. 19, and sets the steering gear ratio with respect to the grip degree estimated in accordance with the grip degree estimation arithmetically operating process 30a in the same manner as the first embodiment. In this case, the example of the grip degree vs gear ratio map 30b is set such that the steering gear ratio becomes totally smaller than the grip degree vs gear ratio map 30b, as illustrated in Fig. 20A. This is because the driver can easily execute the counter steering operation as mentioned below.

In the succeeding step S209 , there is executed a gear ratio map arithmetically operating process with respect to the steering angular speed. This process may correspond to a steering angular speed vs gear ratio map 30g shown in Fig. 19, and a correspondence between the both is mapped in such a relation that the higher the steering angular speed is, the smaller (lower) the steering gear ratio is, as shown in Fig. 20B. In the step S209, the steering gear ratio corresponding to the steering angular speed is set by referring the steering angular speed vs gear ratio map 30g mapped in the manner mentioned above.

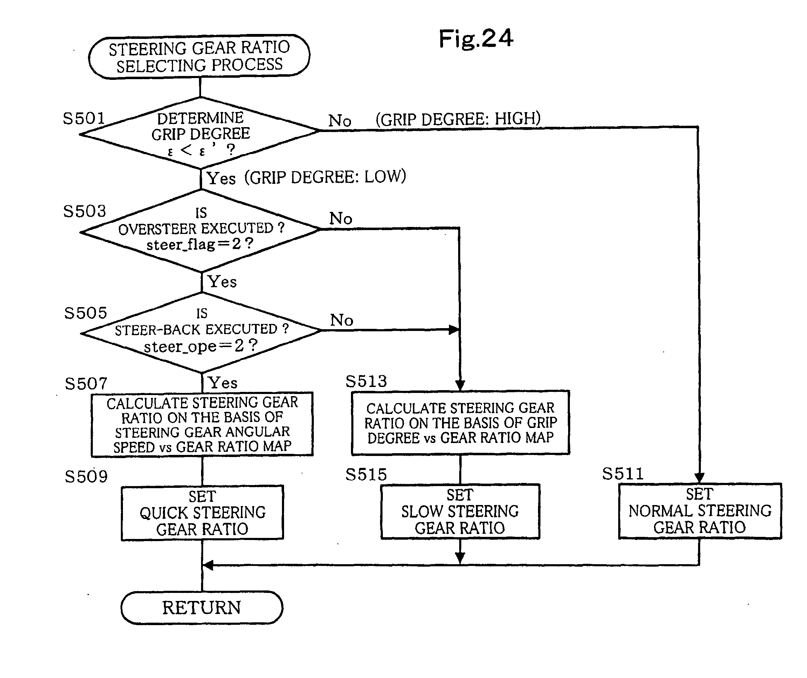

In a step S211, a steering gear ratio selecting process is executed. The process is executed in accordance with a subroutine, and a flow of the process is shown in Fig. 24. In this case, a description will be given of a flow of the steering gear ratio selecting process with reference to Fig. 24.

As shown in Fig. 24, in the steering gear ratio selecting process, there is first executed by a step S501 a grip degree determining process of determining whether or not a grip degree ε estimated in accordance with the grip degree estimation arithmetically operating process 30a is smaller than a predetermined grip degree ε' (ε < ε'). In the case that the process determines that the grip degree is smaller than the predetermined grip degree ε' (Yes in the step S501), the grip degree is low, and then it is determined by the succeeding step 5503 whether or not the vehicle state is in an oversteer state.

The determining process in the step S503 is executed by determining the state of the steering flag (steer_flag) set by the understeer/oversteer determining process described with reference to the step S203. In other words, since the oversteer state is established in the case that the value 2 is set to the steering flag (Yes in the step S503), it is determined in a step S505 whether or not the steer-back state is established.

The determining process in the step S505 is executed by determining the state of the steer operation flag (steer_ope) set by the steering operation discriminating process described with reference to the step S205. In other words, since the steered state is established in the case that the value 2 is set to the steer operation flag (Yes in the step S505), the process is changed in accordance with a step S507.

In the step S507, there is executed a process of selecting a steering angular speed vs gear ratio map 30g and referring to the steering angular speed vs gear ratio map 30g so as to map arithmetically operating the steering gear ratio corresponding to the steering angular speed. In other words, in the case that it is determined that the vehicle speed is in the oversteer state (Yes in the step S503) and it is detected that the rotation of the steering wheel 21 is in the steer-back direction (Yes in the step S505), it is determined that the driver executes the counter steering operation. Accordingly, in the case mentioned above, the steering gear ratio is set to be smaller, by using the steering angular speed vs gear ratio map 30g (Fig. 20B). Therefore, the driver can easily execute the counter steering operation. In this case, in the step S509, a flag indicating that a quick steering gear ratio is set is set.

On the other hand, in the case that it can not be determined in the step S501 that the grip degree is smaller than the predetermined grip degree ε' (No in the step S501), the grip degree is high. In other words, it may correspond to the case of running on the high µ road or the like. Accordingly, since it is not necessary to take the grip limit or the like into consideration, a flag indicating that the normal steering gear ratio is set is set in accordance with the succeeding step S511.

Further, in the case that it can not be determined in the step S503 that the vehicle state is in the oversteer state (No in the step S503), the state of the understeer (the steering flag value is 1) or the neutral steer (the steering flag value is 3) is established. Accordingly, there is no case that the driver executes the counter steering operation. Therefore, there is executed in a step S513 a process of arithmetically operating by map the steering gear ratio corresponding to the steering angular speed with reference to the grip degree vs gear ratio map 30b. In other words, there is executed the AFS control process which is apparently the same as the steering apparatus 20 in the first embodiment. In this case, a flag indicating that a slow steering gear ratio is set is set in accordance with the succeeding step S515.

When setting the respective flags in the steps S509, S511 and S515, the series of steering gear ratio selecting process is finished and the process is returned to the steering gear ratio setting process to be loaded.

When turning back again to Fig. 21 and finishing the steering gear ratio selecting process in the step S211, there is next executed a target actual steering angle calculating process in a step S213. This process is executed as shown in Fig. 19 after setting the steering gear ratio on the basis of the map selected in accordance with the vehicle state and the turning direction of the steering wheel 21, and multiplies the set steering gear ratio by the steering angle obtained by the steering angle sensor 26. Accordingly, the target actual steering angle is calculated.

In the succeeding step S215, a VGRS target angle calculation arithmetically operating process is executed. In other words, a VGRS target angle is calculated by executing an arithmetic operating process of subtracting the target actual steering angle calculated in the step S213 from the steering angle detected by the steering angle sensor 26, whereby a series of steering gear ratio setting process is finished. In this case, the VGRS target value is output to the VGRS_ECU 40 in the same manner as the steering apparatus 20 of the first embodiment, the VGRS control process by the VGRS_ECU 40 is executed, and the motor 32a of the gear ratio variable unit 32 is controlled by outputting the VGRS target value to the motor drive circuit.

As described above, in accordance with the steering apparatus on the basis of the fourth embodiment, when the grip degree is close to the grip limit of the steered wheel in accordance with the grip degree vs gear ratio map 30b arithmetically operated by the AFS_ECU 30, the VGRS target angle (the steering gear ratio) is set such that the steering gearratio is increased, and when the understeer/oversteer determining process 30f determines that the vehicle state is in the oversteer state (Yes in the step S503) and detects that the rotation of the steering wheel 21 is in the steer-back direction (Yes in the step S505), the steering angular speed vs gear ratio map 30g sets the VGRS target angle (the steering gear ratio) such that the steering gear ratio is reduced. Accordingly, since the VGRS target angle is set such that the steering gear ratio is reduced, in the case that it is determined that the driver executes the counter steering operation, the driver can easily execute the counter steering operation. Therefore, there can be obtained an effect that the stability of the vehicle motion can be improved.

### [Fifth Embodiment]

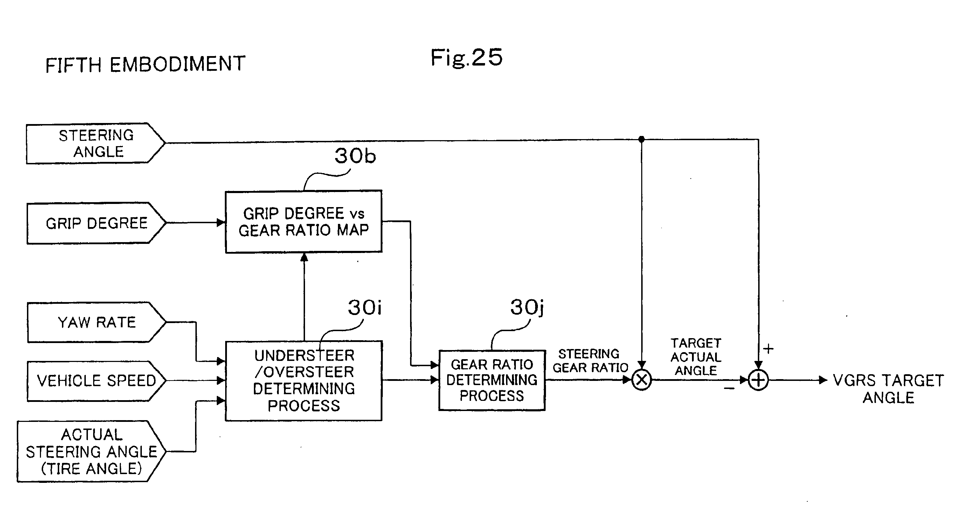

Next, a description will be given of a steering apparatus of a fifth embodiment on the basis of Figs. 25 to 28. In this case, the steering apparatus of the fifth embodiment may correspond to a steering apparatus stated in claim 6.

The steering apparatus of the fifth embodiment is different from the steering apparatus of the first embodiment in a point that it is determined in accordance with a transfer ratio determining process 30j on the basis of the vehicle state and the grip degree in an understeer/oversteer determining process 30i whether or not the grip degree vs gear ratio map 30b is employed. Accordingly, since the other constituting parts are substantially the same as the structures of the steering apparatus 20 of the first embodiment, the description thereof will be omitted, and a description will be given with reference to Figs. 1 and 2 as occasion demands.

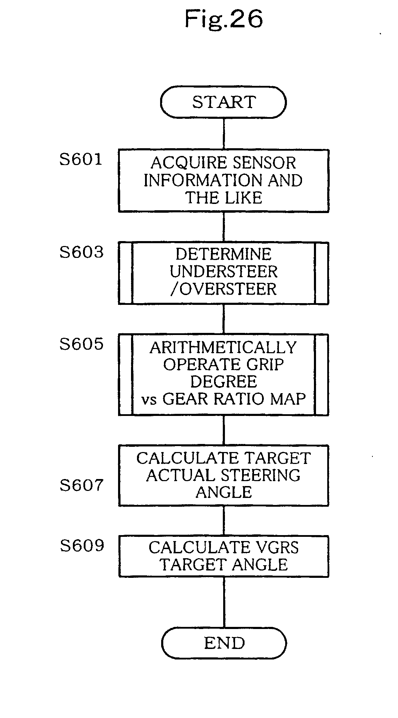

A description will be given of the steering gear ratio setting process executed by the AFS_ECU 30 of the steering apparatus of the fifth embodiment with reference to Figs. 26 to 28. In this case, the steering gear ratio setting process is similar to the interrupt process which is executed every fixed time, and a description of series of main routines will be omitted.

As shown in Fig. 26, after a predetermined initializing process, an acquiring process of the sensor information or the like is executed first in a step S601. In this process, a sensor information is input to the AFS_ECU 30 on the basis of a sensor signal output from the steering angle sensor 26 mentioned above.

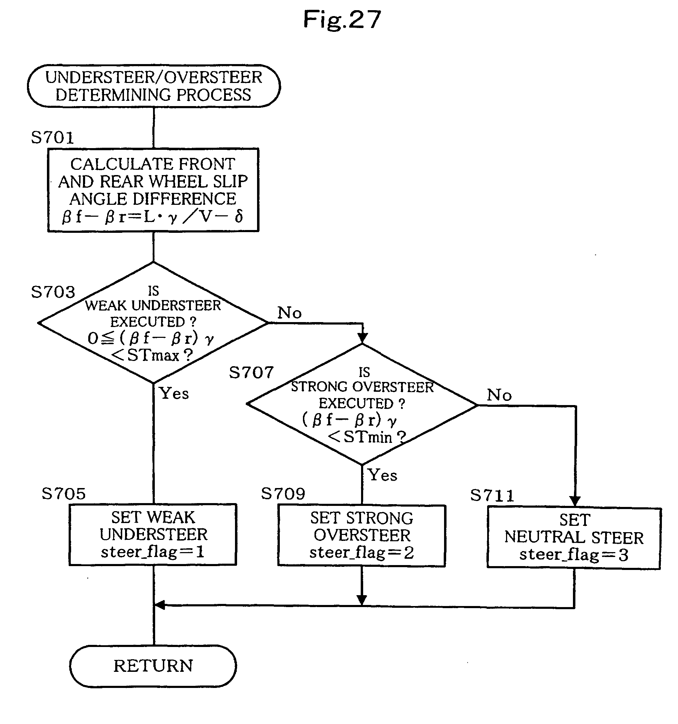

In the succeeding step S603, an understeer/oversteer determining process is executed. The process is a sub-routine, and may correspond to the understeer/oversteer determining process 301 shown in Fig. 25. Since a flow of the process is shown in detail in Fig. 27, a description will be given of the flow of the understeer/oversteer determining process with reference to Fig. 27.

As shown in Fig. 27, in the understeer/oversteer determining process, a front and rear wheel slip angle difference calculating process is first executed in a step S701. The process is executed by arithmetically operating a numerical expression (βf - βr=L · γ/V - δ). In this expression, reference symbol βf denotes a front wheel slip angle (deg), reference symbol βr denotes a rear wheel slip angle (deg), reference symbol L denotes a wheel base (mm), reference symbol γ denotes a yaw rate (deg/S), reference symbol V denotes a vehicle speed (m/S), and reference symbol δ denotes an actual steering angle (deg), respectively. In this case, on the basis of the numerical expression, it is understood that the weak understeer is established if a relation 0 ≦ (βf - βr) · γ <STmax is established, and the strong oversteer is established if a relation(βf - βr) · γ < STmin is established, in accordance with a two-wheel model. Accordingly, it is determined in the following step S703 whether or not the relation 0 ≦ (βf - βr) · γ < STmax is established, and it is determined in a step S707 whether or not the relation (β f - βr) · γ < STmin is established, respectively. In this case, STmax is a predetermined value which is previously set for determining whether or not the weak understeer is established, and STmin is a predetermined value which is previously set for determining whether or not the strong oversteer is established.

When it is determined in the step S703 that the relation 0 ≦ (βf - β r) · γ <STmax is established (Yes in the step S703), the weak understeer is established. Accordingly, a value 1 indicating the weak understeer is set to a steering flag (stear_flag) in a step S705. On the other hand, when it is not determined in the step S703 that the relation 0 ≦ (βf - βr) · γ < STmax is established (No in the step S703), the step goes to the step S707 and it is determined whether or not the strong oversteer is established.

When it is determined in the step S707 that the relation (βf - βr) · γ < STmin is established (Yes in the step S707), the strong oversteer is established. Accordingly, a value 2 indicating the strong oversteer is set to a steering flag (stear_flag) in a step S709. On the other hand, when it is not determined in the step S707 that the relation (βf - βr) · γ < STmin is established (No in the step S707), a neutral state which is neither the weak understeer nor the strong oversteer is established. Accordingly, a value 3 indicating a neutral steer is set to the steering flag (stear_flag) in the succeeding step S711.

When setting the steering flag (stear_flag) in the steps S705, S709 and S711, the series of understeer/oversteer determining process is finished, and the process is returned to the steering gear ratio setting process to be loaded.

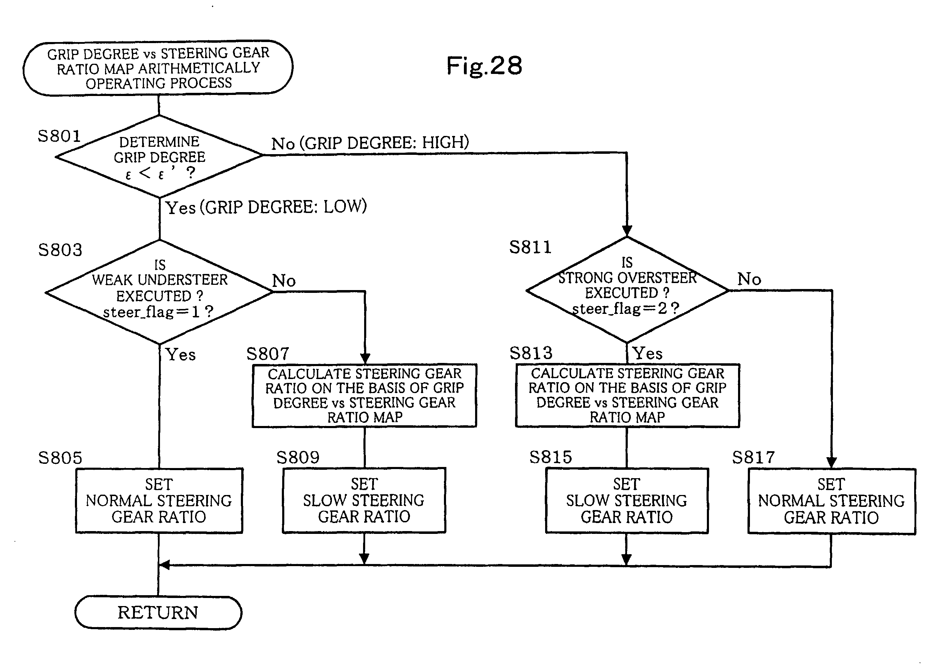

Turning back to Fig. 26 , when finishing the understeer/oversteer determining process in the step S603, a grip degree vs gear ratio arithmetic operation mapping process in a step 5605 is next executed. This process is a sub-routine, and may correspond to a transfer ratio determining process 30 j shown in Fig. 25. Since a flow of the process is shown in detail in Fig. 28, a description will be given of a flow of the grip degree vs gear ratio arithmetic operation mapping process with reference to Fig. 28.

As shown in Fig. 28, in the grip degree vs gear ratio arithmetic operation mapping process, there is first executed in a step S801 a grip degree determining process of determining whether or not a grip degree ε estimated in accordance with the grip degree estimation arithmetically operating process 30a is smaller than a predetermined grip degree ε' (ε < ε'). In the case that the process determines that the grip degree is smaller than the predetermined grip degree ε' (Yes in the step S801), the grip degree is low, and then it is determined by the succeeding step S803 whether or not the vehicle state is in the weak understeer state.

The determining process in the step S803 is executed by determining the state of the steering flag (stear_flag) set by the understeer/oversteer determining process described with reference to the step S603. In other words, since the weak understeer state is established in the case that the value 1 is set to the steering flag (Yes in the step S803), it is necessary to take generation of the self-steer phenomenon into consideration. Accordingly, a flag indicating that the normal steering gear ratio is set is set in a step S805.

Further, in the case that it can not be determined in the step S803 that the vehicle state is in the weak understeer state (No in the step S803), the strong oversteer (the steering flag value 2) or the neutral steer (the steering flag value 3 ) is established. Accordingly, there is executed a process of arithmetically operating by map the steering gear ratio corresponding to the steering angular speed with reference to the grip degree vs gear ratio map 30b. In other words, there is executed the AFS control process which is apparently the same as the steering apparatus 20 of the first embodiment. In this case, a flag indicating that a slow steering gear ratio is set is set in accordance with the succeeding step S809.

On the other hand, in the case that it can not be determined in the step S801 that the grip degree is Smaller than the predetermined grip degree ε' (No in the step S801), the grip degree is high. Accordingly, it is determined in the succeeding step S811 whether or not the vehicle state is in the strong oversteer state. The determining process in the step S811 is executed by determining the state of the steering flag (stear_flag) set in accordance with the understeer/oversteer determining process described with reference to the step S603. Accordingly, in the case that the value 2 is set to the steering flag (Yes in the step S811), the strong oversteer state is established. Accordingly, since it is not necessary to take generation of the self-steer phenomenon or the like into consideration, there is executed a process of arithmetically operating by map the steering gear ratio corresponding to the steering angular speed with reference to the grip degree vs gear ratio map 30b. In otherwords, there is executed the AFS control process which is apparently the same as the steering apparatus 20 of the first embodiment. In this case, a flag indicating that a slow steering gear ratio is set is set in the succeeding step S815.

Further, in the case that it can not be determined in the step S811 that the vehicle state is in the oversteer state (No in the step S811), the state of the weak understeer (the steering flag value is 1) or the neutral steer ( the steering flag value is 3) is established. Accordingly, it is necessary to take generation of the self-steer phenomenon into consideration. Therefore, a flag indicating that a normal steering gear ratio is set in a step S817, without referring to the grip degree vs gear ratio map 30b.

When setting the respective flags in the steps S805, S809, S815 and S817, the series of grip degree vs gear ratio calculating map process is finished and the process is returned to the steering gear ratio setting process to be loaded.

When turning back again to Fig. 26 and finishing the grip degree vs gear ratio arithmetically operation mapping process in the step S611, there is next executed a target actual steering angle calculating process in a step S613. This process is executed as shown in Fig. 25 after setting the steering gear ratio on the basis of the map selected in accordance with the vehicle state and the turning direction of the steering wheel 21, and multiplies the set steering gear ratio by the steering angle obtained by the steering angle sensor 26. Accordingly, the target actual steering angle is calculated.

In the succeeding step S609, a VGRS target angle calculation arithmetically operating process is executed. In other words, a VGRS target angle is calculated by executing an arithmetic operating process of subtracting the target actual steering angle calculated in the step S607 from the steering angle detected by the steering angle sensor 26, whereby a series of steering gear ratio setting process is finished. In this case, the VGRS target value is output to the VGRS_ECU 40 in the same manner as the steering apparatus 20 of the first embodiment, the VGRS control process by the VGRS_ECU 40 is executed, and the motor 32a of the gear ratio variable unit 32 is controlled by outputting the VGRS target value to the motor drive circuit.

As described above, in accordance with the steering apparatus on the basis of the fifth embodiment, since the transfer ratio of the steering is determined on the basis of the vehicle state and the grip degree, there can be obtained an effect that the stability of the vehicle motion can be improved.

### [Sixth Embodiment]

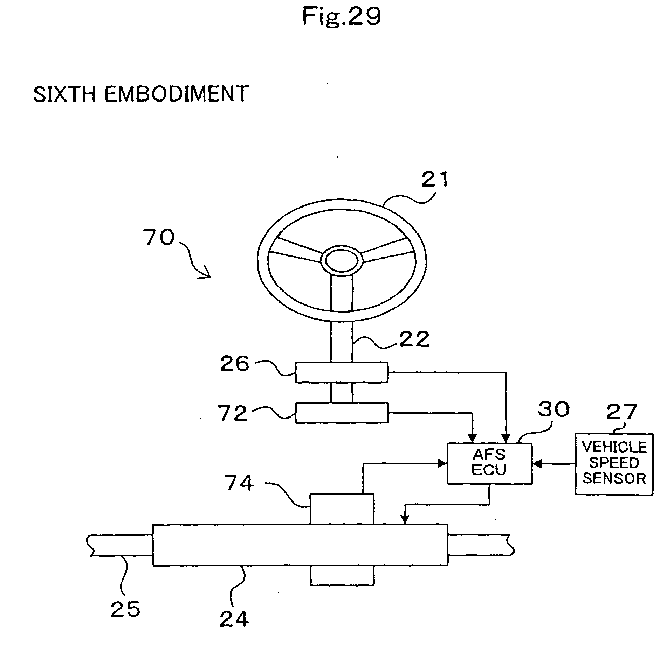

Next, a description will be given of a steerirrg apparatus of a sixth embodiment on the basis of Fig. 29. In this case, the steering apparatus 70 of the sixth embodiment may correspond to a steering apparatus stated in claim 7.

The steering apparatus 70 of the sixth embodiment determines the target actual steering angle of the steered wheel on the basis of the steering angle signal detected by the steering angle sensor 26, the torque signal detected by the torque sensor 72 and the vehicle speed signal detected by the vehicle speed sensor 27 , by means of the AFS_ECU 30, and controls the steered wheel to the determined target actual steering angle by means of the AFS actuator 24. Further, when it is determined by the AFS actuator 24 provided with the actual steering angle sensor 74 that the grip degree estimated in accordance with the grip degree estimation arithmetically operating process which is arithmetically operated by the AFS_ECU 30 is close to the grip limit of the steered wheel, the steered wheel is controlled so as to be fixed to the actual steering angle of the steered wheel in the state close to the grip limit.

Accordingly, it is possible to estimate the grip degree which is changed in correspondence to the magnitude of the road surface µ, even in the steering apparatus controlled by a so-called steer-by wire. When it is determined that the grip degree estimated by the grip degree estimating means is close to the grip limit of the steered wheel due to the low µ road surface running or the like, the steered wheel is controlled so as to be fixed to the actual steering angle of the steered wheel in the state of being close to the grip limit, in place of the initial target actual steering angle. Therefore, it is possible to prevent the steered wheel from being controlled over the grip limit. Accordingly, there can be obtained an effect that the stability of the vehicle motion can be improved, even in the low µ road surface running or the like.

Further, even in the steering apparatus controlled by the steer-by wire of the sixth embodiment, the steered wheel may be controlled on the basis of the grip degree as in the first to fifth embodiments, in addition to the structure that the steered wheel is controlled so as to be fixed to the actual steering angle of the steered wheel in the state of being close to the grip limit.

## Claims

1. A steering apparatus provided with a transfer ratio variable means for changing a transfer ratio on the basis of driving of an electric motor in the middle of a steering transmission system connecting a steering wheel and a steered wheel, comprising:
a steering force index detecting means for detecting at least one steering force index of steering indexes including a steering torque and a steering force applied to a steering system from the steering wheel of a vehicle to a suspension;
a self-aligning torque estimating means for estimating a self-aligning torque generated in a wheel in a front side of said vehicle on the basis of a detected signal of said steering force index detecting means;
a vehicle state quantity detecting means for detecting a state quantity of said vehicle;
a front wheel index estimating means for estimating at least one front wheel index of front wheel indexes including a side force applied to the wheel in the front side of said vehicle and a front wheel slip angle, on the basis of a detected signal of said vehicle state quantity detecting means;
a grip degree estimating means for estimating a grip degree applied to at least the wheel in the front side of said vehicle, on the basis of a change in the self-aligning torque estimated by said self-aligning torque estimating means with respect to the front wheel index estimated by said front wheel index estimating means; and
a transfer ratio setting means for setting a transfer ratio of said transfer ratio variable means on the basis of the grip degree estimated by said grip degree estimating means.

2. A steering apparatus as claimed in claim 1, wherein said transfer ratio setting means sets said transfer ratio such that said transfer ratio is increased in the case that said grip degree gets close to a grip limit of said steered wheel.

3. A steering apparatus as claimed in claim 1, further comprising a steering speed detecting means for detecting a steering speed by the steering wheel,
wherein said transfer ratio setting means sets said transfer ratio such that said transfer ratio is increased on the basis of a steering speed detected by said steering speed detecting means in the case that said grip degree gets close to a grip limit of said steered wheel.

4. A steering apparatus as claimed in claim 1, further comprising a vehicle speed detecting means for detecting a speed of the vehicle,
wherein said transfer ratio setting means sets said transfer ratio such that said transfer ratio is increased on the basis of a vehicle speed detected by said vehicle speed detecting means in the case that said grip degree gets close to a grip limit of said steered wheel.

5. A steering apparatus as claimed in claim 1, further comprising:
an oversteer state determining means for determining that a vehicle state is in an oversteer state; and
a steer-back rotation detecting means for detecting that a rotation of the steering wheel is in a steer-back direction,
wherein said transfer ratio setting means sets said transfer ratio such that said transfer ratio is increased in the case that said grip degree gets close to a grip limit of said steered wheel, and
wherein said transfer ratio setting means sets said transfer ratio such that said transfer ratio is reduced in the case that said oversteer state determining means determines that the vehicle state is the oversteer state, and said steer-back rotation detecting means detects that the rotation of the steering wheel is in a steering back direction.

6. A steering apparatus as claimed in claim 1, further comprising:
an understeer/oversteer determining means for determining on the basis of the state quantity of the vehicle whether the vehicle is in an oversteer or an understeer;
a transfer ratio determining means for determining the transfer ratio of the transfer ratio variable means on the basis of the grip degree of said grip estimating means and a determined result of said understeer/oversteer determining means.

7. A steering apparatus comprising:
an operating state detecting means for detect outputting an operating state of a steering wheel and outputting an operating signal;
a vehicle speed detecting means for detecting a vehicle speed and outputting a vehicle speed signal;
a steering angle determining means for determining a target actual angle of a steered wheel, on the basis of the operating signal detected by said operating state detecting means and the vehicle speed signal detected by said vehicle speed detecting means;
a steered wheel control means for controlling said steered wheel to said target actual angle determined by said steering angle determining means;
a steering force index detecting means for detecting at least one steering force index of steering indexes including a steering torque and a steering force applied to a steering system from the steering wheel of a vehicle to a suspension;
a self-aligning torque estimating means for estimating a self-aligning torque generated in a wheel in a front side of said vehicle on the basis of a detected signal of said steering force index detecting means;
a vehicle state quantity detecting means for detecting a state quantity of said vehicle;
a front wheel index estimating means for estimating at least one front wheel index of front wheel indexes including a side force applied to the wheel in the front side of said vehicle and a front wheel slip angle, on the basis of a detected signal of said vehicle state quantity detecting means; and
a grip degree estimating means for estimating a grip degree applied to at least the wheel in the front side of said vehicle, on the basis of a change in the self-aligning torque estimated by said self-aligning torque estimating means with respect to the front wheel index estimated by said front wheel index estimating means,
wherein said steered wheel is controlled on the basis of the grip degree estimated by said grip degree estimating means, by said steered wheel control means.
